# EUROPEAN PATENT APPLICATION

(11) **EP 2 592 732 A1**
(43) Date of publication of application: **15.05.2013**
(21) Application number: 13000677.8
(22) Date of filing: 02.02.2005
(51) Int. Cl.: H02K 21/00, B60L 15/00, B62M 7/12, H02K 21/22, H02K 21/24, H02K 21/02, H02P 25/24

(54) **Electrically driven vehicle**

(30) Priority: 06.02.2004 JP 2004031417; 09.12.2004 JP 2004357339
(62) Divisional of application: 05709597.8
(71) Applicant: Yamaha Hatsudoki Kabushiki Kaisha, Iwata-shi, Shizuoka 438-8501 (JP)
(72) Inventor: Hino, Haruyoshi, Iwata-shi Shizuoka 4388501 (JP); Murota, Keiko, Iwata-shi Shizuoka 4388501 (JP); Naitou, Shinya, Iwata-shi Shizuoka 4388501 (JP); Terada, Junji, Iwata-shi Shizuoka 4388501 (JP); Ono, Tomohiro, Iwata-shi Shizuoka 4388501 (JP); Yagi, Hiroaki, Iwata-shi Shizuoka 4388501 (JP)
(74) Representative: Grünecker, Kinkeldey, Stockmair & Schwanhäusser

(57) **Abstract**

The invention refers to an electrically driven vehicle comprising: a rotating electric machine (140, 190) including a rotating shaft (150, 200), a rotor (170, 220) mounted on said rotating shaft (150, 200), for corotating with said rotating shaft (150, 200), and a stator (160, 210) opposed to said rotor (170, 220) at a prescribed interval, with said rotor (170, 220) and said stator (160, 210) so formed that an air gap length functioning as magnetic resistance is adjustable; and a vehicle state detecting portion (60, 110) for detecting a vehicle state, wherein said air gap length is adjusted on the basis of a signal indicating said vehicle state detected by said vehicle state detecting portion (60, 110), wherein said stator (160, 210) includes a first stator (161, 211) and a second stator (162, 212) opposed to each other at a prescribed interval, and said air gap length is adjusted by moving at least one of said first stator (161, 211) and said second stator (162, 212).

## Description

### Technical Field

The present invention relates to an electrically driven vehicle, and more particularly, it relates to an electrically driven vehicle comprising a rotating electric machine including a rotor ad a stator.

### Background Art

An electrically driven vehicle having a rotating electric machine including a rotor and a stator as a power source is known in general. In relation to a rotating electric machine for a vehicle including a rotor and a stator, further, a technique of setting/changing power generation characteristics and torque output characteristics to characteristics suitable to a vehicle state by changing the quantity of magnetic flux between the rotor and the stator is known in general. Such a technique is disclosed in Japanese Patent Laying-Open No. 9-37598, for example.

In the aforementioned Japanese Patent Laying-Open No. 9-37598, there is disclosed, in such a radial gap type rotating electric machine for a vehicle that a rotor is arranged inside a stator and the stator and the rotor are opposed to each other in the radial direction, a technique of changing the quantity of magnetic flux between the rotor and the stator in response to a vehicle state by adjusting the magnitudes of the areas of mutually opposite portions of the rotor and the stator by moving the rotor in the extensional direction of the rotor.

In order to increase the quantity of change in the quantity of magnetic flux between the rotor and the stator in the rotating electric machine for a vehicle having the structure that the stator and the rotor are arranged in the radial direction disclosed in Japanese Patent Laying-Open No. 9-37598, however, it is necessary to increase the quantity of movement of the rotor in the extensional direction of the rotating shaft. In this case, the space for the movement of the rotor in the extensional direction of the rotating shaft must be largely provided, and hence there arises such inconvenience that it is difficult to attain downsizing of the rotating electric machine. Consequently, there is such a problem that it is difficult to obtain a vehicle comprising a rotating electric machine capable of setting/changing power generation characteristics and torque output characteristics varying with the quantity of magnetic flux to characteristics suitable to a vehicle state while attaining downsizing.

### Disclosure of the Invention

The present invention has been proposed in order to solve the aforementioned problem, and an object of the present invention is to provide an electrically driven vehicle comprising a rotating electric machine capable of setting/changing power generation characteristics and torque output characteristics to characteristics suitable to a vehicle state while attaining downsizing.

In order to attain the aforementioned object, an electrically driven vehicle according to an aspect of the present invention comprises a rotating electric machine including a rotating shaft, a rotor mounted on the rotating shaft for corotating with the rotating shaft and a stator opposed to the rotor at a prescribed interval, with the rotor and the stator so formed that an air gap length functioning as magnetic resistance is adjustable and a vehicle state detecting portion for detecting a vehicle state. The air gap length is adjusted on the basis of a signal indicating the vehicle state detected by the vehicle state detecting portion.

In the electrically driven vehicle according to this aspect, as hereinabove described, the rotor and the stator are so formed that the air gap length functioning as magnetic resistance is adjustable, whereby the quantity of change in the quantity of magnetic flux flowing through a magnetic path formed by the rotor and the stator can be increased also when the quantity of movement of at least one of the rotor and the stator is small in a case of adjusting the air gap length by moving at least one of the rotor and the stator in the extensional direction of the rotating shaft, for example. Thus, the quantity of movement of at least one of the rotor and the stator can be reduced in a case of changing setting of power generation characteristics and torque output characteristics of the rotating electric machine varying with the quantity of magnetic flux, whereby the rotating electric machine may not be increased in size. Further, the quantity of magnetic flux flowing through the magnetic path formed by the rotor and the stator can be changed in response to the vehicle state by adjusting the air gap length functioning as magnetic resistance on the basis of the signal indicating the vehicle state detected by the vehicle state detecting portion, whereby the power generation characteristics and the torque output characteristics of the rotating electric machine varying with the quantity of magnetic flux can be set/changed to characteristics suitable to the vehicle state. Consequently, the electrically driven vehicle comprising the rotating electric machine capable of setting/changing the power generation characteristics and the torque output characteristics to the characteristics suitable to the vehicle state while attaining downsizing can be obtained according to the aspect.

In the electrically driven vehicle according to the aforementioned aspect, the rotor and the stator are preferably opposed to each other at the prescribed interval in the extensional direction of the rotating shaft, and the air gap length between the rotor and the stator is preferably adjusted by adjusting the distance between the rotor and the stator in the extensional direction of the rotating shaft on the basis of the signal indicating the vehicle state. According to this structure, the air gap length between the rotor and the stator can be adjusted to a value responsive to the vehicle state by adjusting the distance between the rotor and the stator in the extensional direction of the rotating shaft on the basis of the signal indicating the vehicle state in such an axial gap type rotating electric machine that the rotor and the stator are opposed to each other at the prescribed interval in the extensional direction of the rotating shaft.

In the aforementioned structure having the rotor and the stator opposed to each other at the prescribed interval in the extensional direction of the rotating shaft, the rotating electric machine preferably further includes an air gap length adjusting mechanism portion for adjusting the air gap length by moving at least one of the rotor and the stator in the extensional direction of the rotating shaft, and the air gap length adjusting mechanism portion is preferably driven on the basis of the signal indicating the vehicle state. According to this structure, the air gap length between the rotor and the stator can be easily adjusted to the value responsive to the vehicle state with the air gap length adjusting mechanism portion.

In the aforementioned structure having the rotating electric machine including the air gap length adjusting mechanism portion, the air gap length adjusting mechanism portion preferably includes at least an adjustment motor rotating on the basis of the signal indicating the vehicle state, and the air gap length is preferably adjusted to a value responsive to the quantity of rotation of the adjustment motor. According to this structure, the air gap length between the rotor and the stator can be easily adjusted to the value responsive to the vehicle state by adjusting the quantity of rotation of the adjustment motor.

In the aforementioned structure having the air gap length adjusting mechanism portion including the adjustment motor, the air gap length adjusting mechanism portion preferably further includes a movable member moving in the extensional direction of the rotating shaft in response to the quantity of rotation of the adjustment motor, and at least one of the rotor and the stator is preferably moved in the extensional direction of the rotating shaft with the movable member. According to this structure, at least one of the rotor and the stator can be easily moved in the extensional direction of the rotating shaft by a value responsive to the quantity of rotation of the adjustment motor with the movable member.

In the aforementioned structure having the air gap length adjusting mechanism portion including the adjustment motor, the electrically driven vehicle preferably further comprises an adjustment motor control portion for controlling the quantity of rotation of the adjustment motor, and the quantity of rotation of the adjustment motor is preferably controlled by the adjustment motor control portion on the basis of the signal indicating the vehicle state. According to this structure, the quantity of rotation of the adjustment motor can be easily controlled to reach a value responsive to the vehicle state with the adjustment motor control portion.

In the aforementioned structure further comprising the adjustment motor control portion, the adjustment motor control portion preferably determines whether the vehicle state is a normal traveling state or a push-walking state on the basis of the signal indicating the vehicle state. According to this structure, the quantity of rotation of the adjustment motor can be controlled to reach a value suitable to normal traveling with the adjustment motor control portion in the normal traveling state, while the quantity of rotation of the adjustment motor can be controlled to reach a value suitable to push-walking with the adjustment motor control portion in the push-walking state. Thus, the air gap length (quantity of magnetic flux) adjusted by the adjustment motor can be adjusted to the values suitable to the respective ones of the case of the normal traveling state and the case of the push-walking state. Consequently, setting of the power generation characteristics and the torque output characteristics of the rotating electric machine can be easily changed in response to the vehicle state (the case of the normal traveling state and the case of the push-walking state).

In the aforementioned structure having the adjustment motor control portion determining the normal traveling state and the push-walking state, the quantity of rotation of the adjustment motor is preferably controlled by the adjustment motor control portion so that the air gap length reaches a first value when the vehicle state is determined as the normal traveling state by the adjustment motor control portion, and the quantity of rotation of the adjustment motor is preferably controlled by the adjustment motor control portion so that the air gap length reaches a second value larger than the first value when the vehicle state is determined as the push-walking state by the adjustment motor control portion. According to this structure, the air gap length (quantity of magnetic flux) adjusted by the adjustment motor can be easily adjusted to the values suitable to the respective ones of the case of the normal traveling state and the case of the push-walking state. In other words, a load with respect to rotation of the rotor can be reduced by increasing the air gap length so that the quantity of magnetic flux decreases in the case of the push-walking state, whereby it is possible to attain push-walkability.

In the aforementioned structure further comprising the adjustment motor control portion, the signal indicating the vehicle state preferably includes at least a rotating electric machine speed signal indicating the speed of the rotating electric machine, and the quantity of rotation of the adjustment motor is preferably controlled by the adjustment motor control portion on the basis of the rotating electric machine speed signal. According to this structure, the quantity of rotation of the adjustment motor can be controlled to reach a value suitable to a case where the rotating electric machine (rotor) is in high-speed rotation with the adjustment motor control portion in the case where the rotating electric machine (rotor) is in high-speed rotation, while the quantity of rotation of the adjustment motor can be controlled to reach a value suitable to a case where the rotating electric machine (rotor) is in low-speed rotation with the adjustment motor control portion in the case where the rotating electric machine (rotor) is in low-speed rotation. Thus, the air gap length (quantity of magnetic flux) adjusted with the adjustment motor can be adjusted to the values suitable to the respective ones of the case where the rotating electric machine (rotor) is in high-speed rotation and the case where the rotating electric machine (rotor) is in low-speed rotation. Consequently, setting of the power generation characteristics and the torque output characteristics of the rotating electric machine can be easily changed in response to the vehicle state (the case where the rotating electric machine (rotor) is in high-speed rotation and the case where the rotating electric machine (rotor) is in low-speed rotation).

In the aforementioned structure in which control of the quantity of rotation of the adjustment motor with the adjustment motor control portion is performed on the basis of the rotating electric machine speed signal, the quantity of rotation of the adjustment motor is preferably controlled by the adjustment motor control portion so that the air gap length reaches a third value when the rotating electric machine is in high-speed rotation, and the quantity of rotation of the adjustment motor is preferably controlled by the adjustment motor control portion so that the air gap length reaches a fourth value smaller than the third value when the rotating electric machine is in low-speed rotation. According to this structure, the air gap length (quantity of magnetic flux) adjusted by the adjustment motor can be easily adjusted to the values suitable to the respective ones of the case where the rotating electric machine (rotor) is in high-speed rotation and the case where the rotating electric machine (rotor) is in low-speed rotation. In other words, the load with respect to rotation of the rotor can be reduced by increasing the air gap length so that the quantity of magnetic flux decreases when the rotating electric machine (rotor) is in high-speed rotation, whereby the traveling state of the vehicle traveling at a high speed can be stabilized. Further, occurrence of iron loss can be reduced by increasing the air gap length so that the quantity of magnetic flux decreases when the rotating electric machine (rotor) is in high-speed rotation, whereby it is possible to suppress occurrence of such inconvenience that power generation efficiency of the rotating electric machine lowers due to occurrence of iron loss. In addition, the quantity of generation of electromotive force in the rotating electric machine can be increased and the torque output of the rotating' electric machine can be increased by reducing the air gap length so that the quantity of magnetic flux increases when the rotating electric machine (rotor) is in low-speed rotation.

In the aforementioned structure further comprising the adjustment motor control portion, the electrically driven vehicle preferably further comprise a battery, supplying a current to the rotating electric machine, charged by power generation of the rotating electric machine, the signal indicating the vehicle state preferably includes at least a battery voltage signal indicating the voltage of the battery, and the quantity of rotation of the adjustment motor is preferably controlled by the adjustment motor control portion on the basis of the battery voltage signal. According to this structure, the air gap length (quantity of magnetic flux) can be adjusted with the adjustment motor so that an induced voltage generated by the rotating electric machine lowers below the voltage of the battery. Thus, a charging current to the battery can be inhibited from excessively increasing, whereby it is possible to suppress occurrence of such inconvenience that the battery becomes easy to consume due to overcharge of the battery. Consequently, reliability of the electrically driven vehicle including the battery can be improved.

In the aforementioned structure in which control of the quantity of rotation of the adjustment motor with the adjustment motor control portion is performed on the basis of the battery voltage signal, the air gap length is preferably adjusted by the adjustment motor so that an induced voltage generated by the rotating electric machine lowers below the voltage of the battery. According to this structure, the charging current to the battery can be easily inhibited from excessively increasing.

In the electrically driven vehicle according to the aforementioned aspect, the stator preferably includes a first stator and a second stator opposed to each other at a prescribed interval, and the air gap length is preferably adjusted by moving at least one of the first stator and the second stator. According to this structure, the quantity of magnetic flux can be easily changed by rendering the magnitude of the air gap length of a magnetic path formed in an initial state not moving the first stator and the second stator and the magnitude of the air gap length of a magnetic path formed in a state after moving at least one of the first stator and the second stator different from each other, for example.

In the aforementioned structure having the stator including the first stator and the second stator, the first stator preferably includes a plurality of first core members annularly arranged at a prescribed interval from each other, the second stator preferably includes a plurality of second core members annularly arranged at a prescribed interval from each other, and the air gap length is preferably adjusted by moving at least one of the first stator and the second stator thereby changing to a state where the first core members and the second core members are opposite to each other and a state where the first core members and the second core members are not opposite to each other. According to this structure, the quantity of magnetic flux can be more easily changed by rendering the air gap length of a magnetic path formed in the case where the first core members and the second core members are opposite to each other and the air gap length of a magnetic path formed in the case where the first core members and the second core members are not opposite to each other different from each other.

In the aforementioned structure having the first stator including the plurality of first core members and the second stator including the plurality of second core members, either the first core members or the second core members are preferably opposed to the rotor, a coil is preferably mounted on either the first core members or the second core members opposed to the rotor, and the air gap length is preferably so adjusted that substantially no magnetic path is formed on a portion of either the first core members or the second core members mounted with the coil. According to this structure, the magnetic flux can be inhibited from traversing the coil in rotation of the rotor, whereby the quantity of magnetic flux generated in either the first core members or the second core members can be inhibited from increase resulting from a current flowing through the coil due to the magnetic flux traversing the coil. Thus, the load with respect to rotation of the rotor can be inhibited from increase. Further, inflow of the magnetic flux into the first core members and the second core members is suppressed in rotation of the rotor, whereby the load with respect to rotation of the rotor can be inhibited from increase also by this.

In the aforementioned structure having the first stator including the plurality of first core members and the second stator including the plurality of second core members, the air gap length is preferably adjusted by rotating the second stator in the rotational direction of the rotor. According to this structure, the air gap length can be easily adjusted by rotating the second rotor in the rotational direction of the rotor.

In the aforementioned structure rotating the second stator in the rotational direction of the rotor, the electrically driven vehicle preferably further comprises a rotation driving portion for rotating the second stator in the rotational direction of the rotor. According to this structure, the second stator can be easily rotated in the rotational direction of the rotor with the rotation driving portion.

In the aforementioned structure rotating the second stator in the rotational direction of the rotor, the air gap length between the first core members and the second core members preferably decreases below the distance between adjacent first core members when the first core members and the second core members are opposite to each other, the air gap length between adjacent first core members preferably decreases below the distance between the first core members and the second core members when the second stator rotates in the rotational direction of the rotor so that the second core members move to a position not opposite to the first core members, and the air gap length between the first core members and the second core members in the case where the first core members and the second core members are opposite to each other is preferably smaller than the air gap length between adjacent first core members in the case where the second core members move to the position not opposite to the first core members. According to this structure, the quantity of magnetic flux in the case where the first core members and the second core members are opposite to each other and the quantity of magnetic flux in the case where the first core members and the second core members are not opposite to each other can be easily rendered different from each other.

In the aforementioned structure having the first stator including the plurality of first core members and the second stator including the plurality of second core members, the plurality of first core members constituting the first stator may be opposed to the rotor at a prescribed interval in the extensional direction of the rotating shaft while the plurality of second core members constituting the second stator may be opposed to the first stator at a prescribed interval in the extensional direction of the rotating shaft, a magnetic path may be preferably formed by the rotor, the first core members and the second core members in the state where the first core members and the second core members are opposite to each other, and a magnetic path may be formed by the rotor and the first core members in the state where the first core members and the second core members are not opposite to each other. According to this structure, the air gap length can be easily adjusted by changing the formed magnetic path in such an axial gap type rotating electric machine that the rotor and the first stator are opposed to each other at the prescribed interval in the extensional direction of the rotating shaft and the first stator and the second stator are opposed to each other at the prescribed interval in the extensional direction of the rotating shaft.

In the aforementioned structure having the first stator including the plurality of first core members and the second stator including the plurality of second core members, the rotor may include a cylindrically formed rotor, the plurality of first core members constituting the first stator may be opposed to the rotor at a prescribed interval in the radial direction while the plurality of second core members constituting the second stator may be arranged inside or outside the first stator at a prescribed interval with respect to the first stator, a magnetic path may be formed by the rotor, the first core members and the second core members in the state where the first core members and the second core members are opposite to each other, and a magnetic path may be formed by the rotor and the first core member in the state where the first core members and the second core members are not opposite to each other. According to this structure, the air gap length can be easily adjusted by changing the formed magnetic path in such a radial gap type rotating electric machine that the first stator is opposed to the cylindrical rotor at the prescribed interval in the radial direction and the second stator is arranged inside or outside the first stator at the prescribed interval with respect to the first stator.

### Brief Description of the Drawings

[Fig. 1] A schematic view showing the structure of an electric two-wheeler according to a first embodiment of the present invention.
[Fig. 2] A sectional view showing the structure of an electric motor of the electric two-wheeler according to the first embodiment of the present invention.
[Fig. 3] A block diagram showing the structure of a control system for the electric two-wheeler according to the first embodiment of the present invention.
[Fig. 4] A flow chart for illustrating a control method of an air gap length adjusting mechanism portion of the electric motor according to the first embodiment shown in Fig. 1.
[Fig. 5] Another flow chart for illustrating the control method of the air gap length adjusting mechanism portion of the electric motor according to the first embodiment shown in Fig. 2.
[Fig. 6] A sectional view for illustrating a method of adjusting an air gap length in the electric motor according to the first embodiment shown in Fig. 1.
[Fig. 7] A graph showing a line of B-H (magnetic flux density-magnetizing force) characteristics of a magnet and a line of a permeance coefficient.
[Fig. 8] A model diagram for illustrating the quantity of magnetic flux between a magnet and a yoke.
[Fig. 9] Another model diagram for illustrating the quantity of magnetic flux between another magnet and another yoke.
[Fig. 10] A block diagram showing the structure of a control system for an electric two-wheeler according to a second embodiment of the present invention.
[Fig. 11] A motor control command value correction table stored in a stepping motor control command value correcting portion of the control system according to the second embodiment shown in Fig. 10.
[Fig. 12] A graph showing the relation between a motor speed and a torque output.
[Fig. 13] A basic motor constant read table stored in a basic stepping motor constant calculating portion of a control system according to a modification of the second embodiment.
[Fig. 14] A perspective view showing the structure of an electric motor of an electric two-wheeler according to a third embodiment of the present invention.
[Fig. 15] An exploded perspective view of the electric motor of the electric two-wheeler according to the third embodiment shown in Fig. 14.
[Fig. 16] A perspective view showing a state in rotation of a second stator of the electric motor according to the third embodiment shown in Fig. 14.
[Fig. 17] Another perspective view showing the state in rotation of the second stator of the electric motor according to the third embodiment shown in Fig. 14.
[Fig. 18] Still another perspective view showing the state in rotation of the second stator of the electric motor according to the third embodiment shown in Fig. 14.
[Fig. 19] A model diagram for illustrating flow of magnetic flux in the electric motor according to the third embodiment shown in Fig. 14.
[Fig. 20] Another model diagram for illustrating the flow of the magnetic flux in the electric motor according to the third embodiment shown in Fig. 14.
[Fig. 21] A front elevational view showing the structure of an electric motor of an electric two-wheeler according to a fourth embodiment of the present invention.
[Fig. 22] A front elevational view showing a state where a second stator rotates from the state shown in Fig. 21.

### Best Modes for Carrying Out the Invention

Embodiments of the present invention are now described with reference to the drawings.

### (First Embodiment)

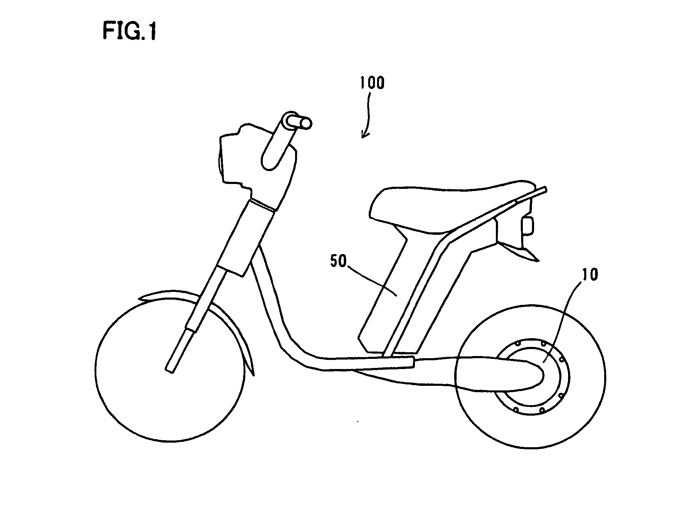

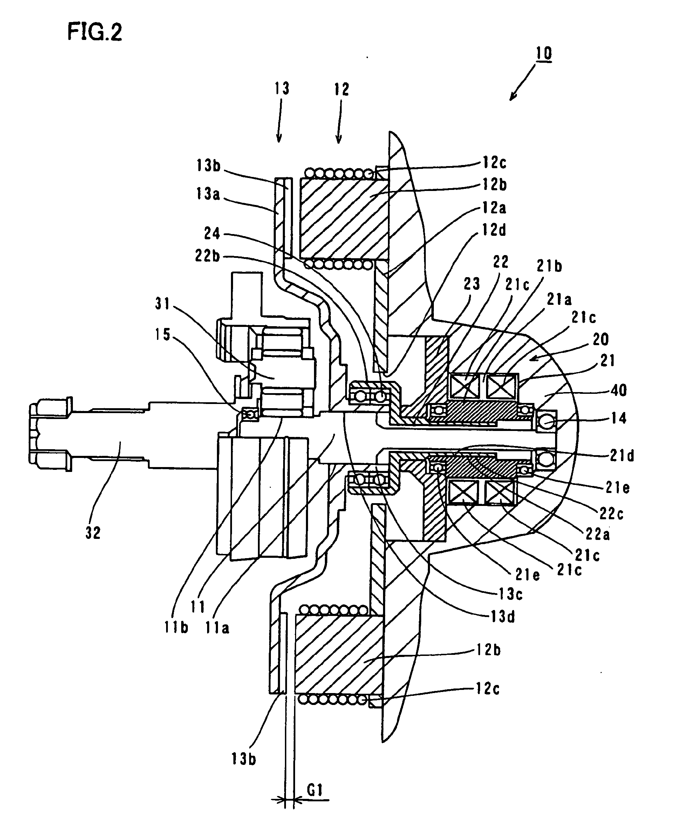

First, an electric two-wheeler 100 according to a first embodiment is described with reference to Figs. 1 and 2.

The electric two-wheeler 100 according to the first embodiment comprises an electric motor 10 and a battery 50, as shown in Fig. 1. The electric motor 10 is an example of the "rotating electric machine" in the present invention.

According to the first embodiment, the electric motor 10 is constituted of a motor rotating shaft 11, a stator 12, a rotor 13 and an air gap length adjusting mechanism portion 20, as shown in Fig. 2. The motor rotating shaft 11 is an example of the "rotating shaft" in the present invention. The electric motor 10 has such an axial gap type structure that the stator 12 and the rotor 13 are opposed to each other at a prescribed interval in the extensional direction of the motor rotating shaft 11.

The motor rotating shaft 11 is rotatably supported by bearings 14 and 15. A spline is formed on a prescribed portion 11a of the motor rotating shaft 11. Further, the motor rotating shaft 11 has a gear portion 11b, while a gear 31 is meshed with the gear portion 11b. Rotation of the motor rotating shaft 11 is transmitted to an axle 32 through the gear 31.

The stator 12 includes a stator yoke 12a, a plurality of teeth 12b and a plurality of coils 12c. The stator yoke 12a is formed in the shape of a disc, and fixed to a case 40. Further, the stator yoke 12a has a hole portion 12d in the central portion thereof, and is so arranged that the center of the hole portion 12d (stator yoke 12a) and the axial core of the motor rotating shaft 11 coincide with each other. The plurality of teeth 12b are mounted on the stator yoke 12a, to protrude from a surface of the stator yoke 12a closer to the rotor 13. Further, the plurality of teeth 12b are arranged at a prescribed interval from each other along the circumferential direction of the discoid stator yoke 12a. Fig. 2 illustrates only two teeth 12b opposite to each other through the central point of the discoid stator yoke 12a. The plurality of coils 12c are mounted on the respective ones of the plurality of teeth 12b respectively.

The rotor 13 includes a rotor yoke 13a and a plurality of magnets 13b. The rotor yoke 13a is formed in the shape of a disc, while a protrusion 13c protruding toward the stator 12 is formed on the central portion of the rotor yoke 13a. A hole portion 13d is formed in the central portion of the rotor yoke 13a. A spline is formed on the inner peripheral surface of this hole portion 13d of the rotor yoke 13a. The spline formed on the prescribed portion 11a of the motor rotating shaft 11 is meshed with the spline formed on the inner peripheral surface of the hole portion 13d of the rotor yoke 13a. In other words, the rotor yoke 13a and the motor rotating shaft 11 are coupled with each other through the splines. The plurality of magnets 13b include a plurality of magnets 13b of north poles and a plurality of magnets 13b of south poles, and are mounted on a surface of the rotor yoke 13a closer to the stator 12. In the plurality of magnets 13b, the north poles and the south poles are alternately arranged at a prescribed interval along the circumferential direction of the discoid rotor yoke 13a. Fig. 2 illustrates only two magnets 13b opposite to each other through the central point of the discoid rotor yoke 13a.

In the electric motor 10 according to the first embodiment, a magnetic path is formed by the stator yoke 12a, the teeth 12b and the rotor yoke 13a. In this case, the distance between the teeth 12b (stator 12) and the magnets 13b (rotor 13) in the extensional direction of the motor rotating shaft 11 is an air gap length functioning as magnetic resistance. In other words, the air gap length is G1 in Fig. 2.

According to the first embodiment, the air gap length adjusting mechanism portion 20 includes a stepping motor 21, a slider 22 and a slider support member 23. The stepping motor 21 is an example of the "adjustment motor" in the present invention, and the slider 22 is an example of the "movable member" in the present invention.

The stepping motor 21 is constituted of a cylindrical stator 21a including a plurality of coils 21c and a cylindrical rotor 21b including a plurality of magnets (not shown). The stator 21a is fixed to the case 40, while the rotor 21b is arranged inside the stator 21a. Further, a screw is formed on a prescribed portion 21d of the inner peripheral surface of the rotor 21b. The rotor 21b is rotatably supported by a pair of bearings 21e. The stepping motor 21 is so arranged that the rotor 21b rotates in the same direction as the motor rotating shaft 11 and the rotation center of the rotor 21b and the axial core of the motor rotating shaft 11 coincide with each other.

The slider 22 has a small-diametral portion 22a and a large-diametral portion 22b. A screw is formed on a prescribed portion 22c of the outer peripheral surface of the small-diametral portion 22a of the slider 22. The screw formed on the prescribed portion 21d of the inner peripheral surface of the rotor 21b of the stepping motor 21 is meshed with the screw formed on the prescribed portion 22c of the outer peripheral surface of the small-diametral portion 22a of the slider 22. In other words, the slider 22 and the stepping motor 21 (rotor 21b) are coupled with each other through the screws. The slider 22 is supported by the slider support member 23, not to corotate with the rotor 21b of the stepping motor 21. The large-diametral portion 22b of the slider 22 and the protrusion 13c of the rotor yoke 13a are coupled with each other through a bearing 24.

The battery 50 shown in Fig. 1 is charged by power generation of the electric motor 10, and is enabled to supply a driving current to the electric motor 10.

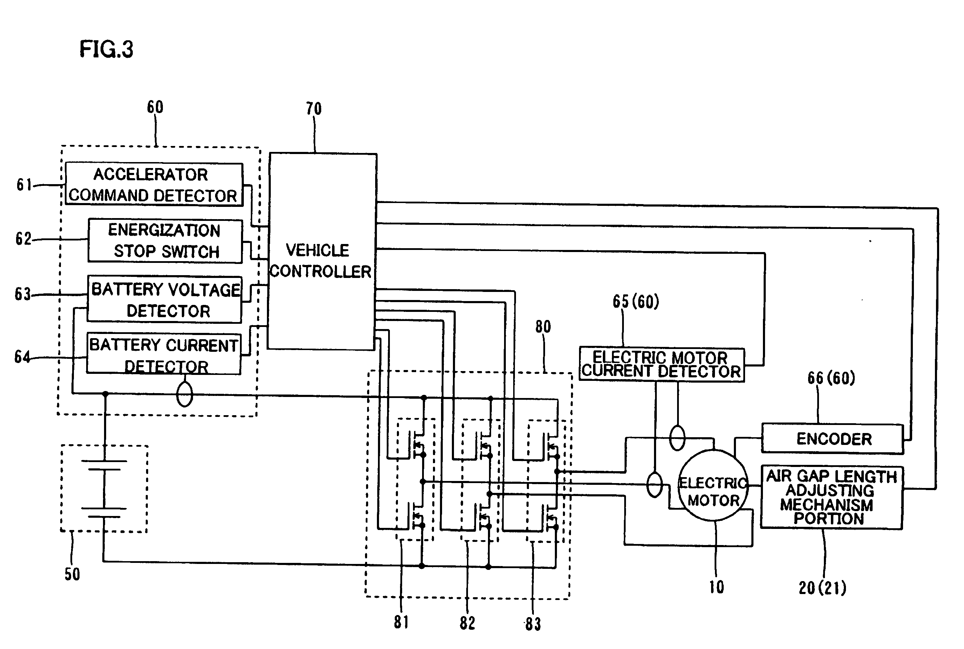

A control system for the electric motor 10 according to the first embodiment is now described with reference to Figs. 2 and 3.

The control system for the electric motor 10 according to the first embodiment comprises a vehicle state detecting portion 60, a vehicle controller 70 and an electric motor driving circuit portion 80, as shown in Fig. 3. The vehicle controller 70 is an example of the "adjustment motor control portion" in the present invention.

The vehicle controller 70 is connected to the air gap length adjusting mechanism portion 20 (stepping motor 21). Further, the vehicle controller 70 is connected to the electric motor 10 through the electric motor driving circuit portion 80. The electric motor 10 and the electric motor driving circuit portion 80 are connected with each other through three wires. The battery 50 is connected to the electric motor 10 through the electric motor driving circuit portion 80.

The vehicle state detecting portion 60 includes an accelerator command detector 61, an energization stop switch 62, a battery voltage detector 63, a battery current detector 64, an electric motor current detector 65 and an encoder 66.

The accelerator command detector 61 has a function of generating, when an accelerator (not shown) is operated by a user, an accelerator command value signal responsive to the opening of the accelerator and outputting this accelerator command value signal to the vehicle controller 70. The energization stop switch 62 is a switch operated by the user when stopping energization between the electric motor 10 and the electric motor driving circuit portion 80. When the energization stop switch 62 is operated, a stop signal is generated by the energization stop switch 62 and this stop signal is output from the energization stop switch 62 to the vehicle controller 70.

The battery voltage detector 63 has a function of generating a battery voltage signal by detecting the voltage of the battery 150 and outputting this battery voltage signal to the vehicle controller 70. The battery current detector 64 has a function of generating a battery current signal by detecting a current flowing between the positive pole of the battery 50 and the electric motor driving circuit portion 80 and outputting this battery current signal to the vehicle controller 70.

The electric motor current detector 65 has a function of generating a motor current signal by detecting currents flowing through two wires among the three wires connecting the electric motor 10 and the electric motor driving circuit portion 80 with each other and outputting this motor current signal to the vehicle controller 70. The encoder 66 has a function of generating a motor speed signal by detecting the speed of the electric motor 10 (rotor 13) (see Fig. 2) and outputting this motor speed signal to the vehicle controller 70.

The aforementioned accelerator command value signal, the aforementioned stop signal, the aforementioned battery voltage signal, the aforementioned battery current signal, the aforementioned motor current signal and the aforementioned motor speed signal are examples of the "signal indicating the vehicle state" in the present invention.

According to the first embodiment, the vehicle controller 70 has a function of determining whether the vehicle state is a normal traveling state or a push-walking (power supply cutoff) state on the basis of the aforementioned signals (the accelerator command value signal, the stop signal, the battery voltage signal, the battery current signal, the motor current signal and the motor speed signal) indicating the vehicle state. Further, the vehicle controller 70 also has a function of generating an air gap length adjusting command signal responsive to the vehicle state after determining whether the vehicle state is a normal traveling state or a push-walking (current supply cutoff) state and outputting this air gap length adjusting command signal to the air gap length adjusting mechanism portion 20. In addition, the vehicle controller 70 also has a function of generating a motor current command signal responsive to the vehicle state after determining whether the vehicle state is a normal traveling state or a push-walking (current supply cutoff) state and outputting this motor current command signal to the electric motor driving circuit portion 80.

The electric motor driving circuit portion 80 has a function of controlling supply of the driving current from the battery 50 to the electric motor 10 and controlling supply of the charging current from the electric motor 10 to the battery 50. This electric motor driving circuit portion 80 is constituted of three pairs of field-effect transistors 81, 82 and 83. The respective ones of the three wires linked to the electric motor 10 are connected to the three pairs of field-effect transistors 81 to 83 respectively. The positive and negative poles of the battery 50 are connected to the three pairs of field-effect transistors 81 to 83. Further, the vehicle controller 70 is connected to the gates of the pairs of field-effect transistors 81 to 83. In other words, the pairs of field-effect transistors 81 to 83 are formed to be turned on or off in response to the motor current command signal output from the vehicle controller 70.

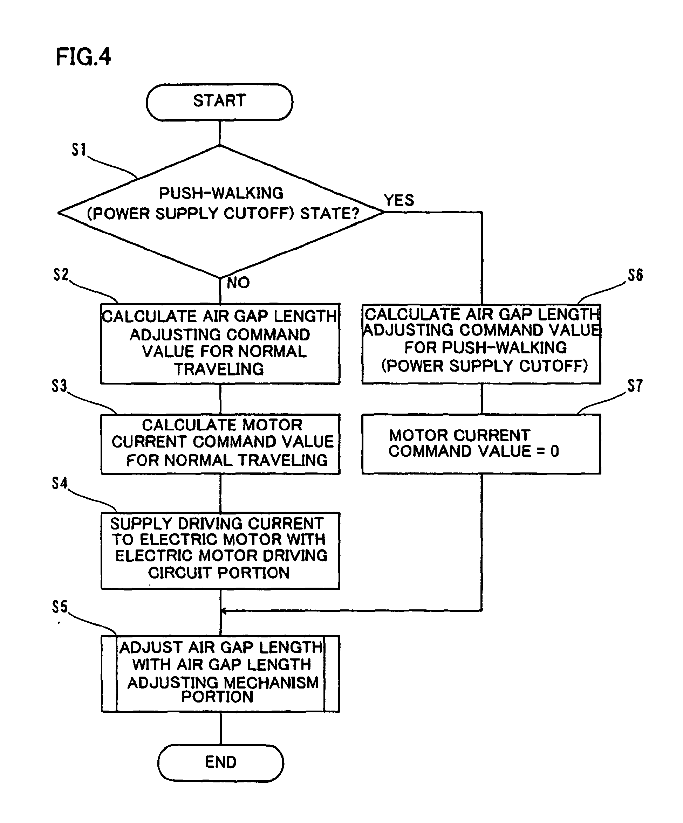

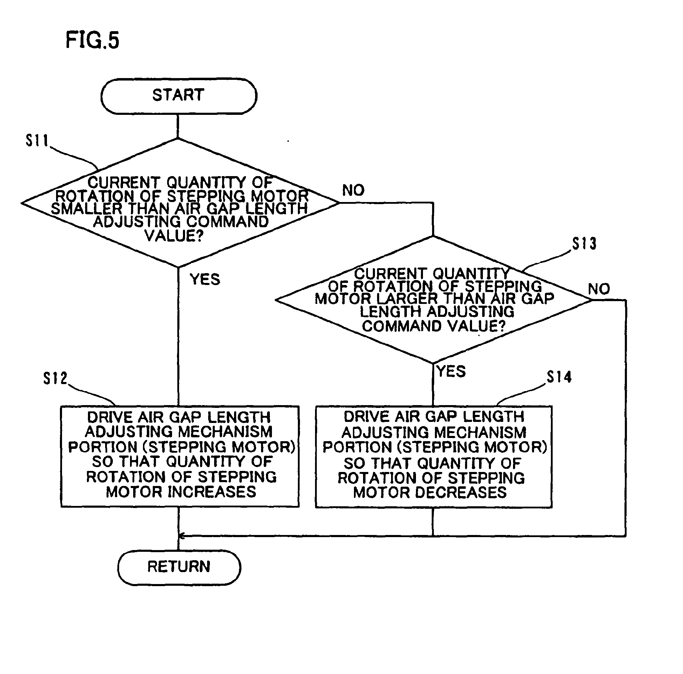

A method of controlling the air gap length adjusting mechanism portion according to the first embodiment is now described with reference to Figs. 4 and 5.

At a step S1 shown in Fig. 4, a determination as to whether or not the vehicle state is a push-walking (current supply cutoff) state is made by the vehicle controller 70. This determination by the vehicle controller 70 is made on the basis of the signals (the accelerator command value signal, the stop signal, the battery voltage signal, the battery current signal, the motor current signal and the motor speed signal) indicating the vehicle state. When the vehicle state is determined as not the push-walking (power supply cutoff) state, the process advances to a step S2.

At the step S2, an air gap length adjusting command value for normal traveling is calculated by the vehicle controller 70. This calculation of the air gap length adjusting command value for normal traveling by the vehicle controller 70 is performed on the basis of the battery voltage signal output from the battery voltage detector 63 and the motor speed signal output from the encoder 66.

At a step S3, a motor current command value for normal traveling is calculated by the vehicle controller 70. This calculation of the motor current command value for normal traveling by the vehicle controller 70 is performed on the basis of the accelerator command value signal output from the accelerator command detector 61 and the motor current signal output from the electric motor current detector 65.

At a step S4, the electric motor driving circuit portion 80 is driven on the basis of the motor current command signal responsive to the motor current command value for normal traveling output from the vehicle controller 70. Thus, a driving current for normal traveling is supplied from the battery 50 to the electric motor 10 through the electric motor driving circuit portion 80.

At a step S5, the air gap length adjusting mechanism portion 20 is driven on the basis of the air gap length adjusting command signal responsive to the air gap length adjusting command value for normal traveling output from the vehicle controller 70. Thus, the air gap length of the magnetic path formed by the stator 12 and the rotor 13 of the electric motor 10 is adjusted to reach a value responsive to the normal traveling state.

When the vehicle state is determined as the push-walking (current supply cutoff) state at the step S1, the process advances to a step S6.

At the step S6, an air gap length adjusting command value for push-walking (current supply cutoff) is calculated by the vehicle controller 70. This calculation of the air gap length adjusting command value for push-walking (current supply cutoff) by the vehicle controller 70 is performed on the basis of the battery voltage signal output from the battery voltage detector 63 and the motor speed signal output from the encoder 66.

At a step S7. the motor current command value is set to "0" by the vehicle controller 70. Then, the electric motor driving circuit portion 80 is driven on the basis of a motor current command signal responsive to this motor current command value ("0"). In this case, supply of the driving current from the battery 50 to the electric motor 10 is cut off by the electric motor driving circuit portion 80.

At a step S8, the air gap length adjusting mechanism portion 20 is driven on the basis of an air gap length adjusting command signal responsive to the air gap length adjusting command value for push-walking (power supply cutoff) output from the vehicle controller 70. Thus, the air gap length of the magnetic path formed by the stator 12 and the rotor 13 of the electric motor 10 is adjusted to reach a value responsive to the push-walking (power supply cutoff) state.

Adjustment of the air gap length with the air gap length adjusting mechanism portion 20 at the step S5 is now described in detail with reference to a flow chart of Fig. 5.

At a step S11 shown in Fig. 5, a determination as to whether or not the current quantity of rotation of the stepping motor 21 of the air gap length adjusting mechanism portion 20 is smaller than the air gap length adjusting command value is made by the vehicle controller 70. When the current quantity of rotation of the stepping motor 21 of the air gap length adjusting mechanism portion 20 is determined as smaller than the air gap length adjusting command value, the process advances to a step S12.

At the step S12, the vehicle controller 70 makes the quantity of rotation of the stepping motor 21 coincide with the air gap length adjusting command value by increasing the quantity of rotation of the stepping motor 21. Thus, the air gap length of the magnetic path formed by the stator 12 and the rotor 13 of the electric motor 10 is adjusted to a value responsive to the quantity of rotation of the stepping motor 21. In other words, the air gap length of the magnetic path formed by the stator 12 and the rotor 13 of the electric motor 10 is adjusted in response to the vehicle state.

When the current quantity of rotation of the stepping motor 21 of the air gap length adjusting mechanism portion 20 is determined as not smaller than the air gap length adjusting command value, the process advances to a step S13.

At the step S13, a determination as to whether or not the current quantity of rotation of the stepping motor 21 of the air gap length adjusting mechanism portion 20 is larger than the air gap length adjusting command value is made by the vehicle controller 70. When the current quantity of rotation of the stepping motor 21 of the air gap length adjusting mechanism portion 20 is determined as larger than the air gap length adjusting command value, the process advances to a step S14.

At the step S14, the vehicle controller 70 makes the quantity of rotation of the stepping motor 21 coincide with the air gap length adjusting command value by reducing the quantity of rotation of the stepping motor 21. Thus, the air gap length of the magnetic path formed by the stator 12 and the rotor 13 of the electric motor 10 is adjusted to a value responsive to the quantity of rotation of the stepping motor 21. In other words, the air gap length of the magnetic path formed by the stator 12 and the rotor 13 of the electric motor 10 is adjusted in response to the vehicle state.

When the current quantity of rotation of the stepping motor 21 of the air gap length adjusting mechanism portion 20 is determined as not larger than the air gap length adjusting command value at the step S13, the stepping motor 21 is not driven but the air gap length of the magnetic path formed by the stator 12 and the rotor 13 of the electric motor 10 is held.

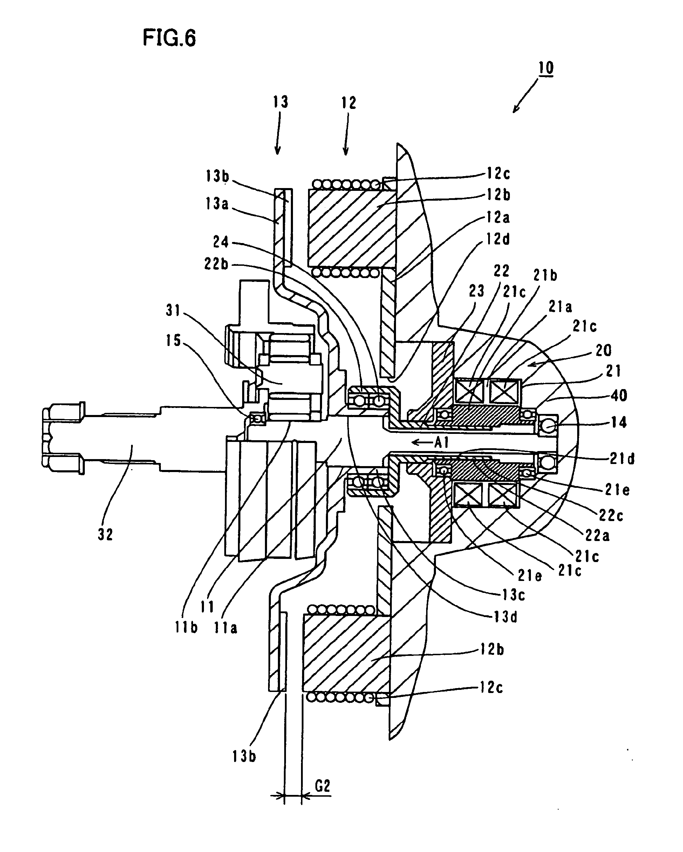

Operations at the time when the air gap length is actually adjusted by the control method shown in Figs. 4 and 5 are now described with reference to Figs. 2, 3 and 6. A case of increasing the air gap length of the magnetic path formed by the stator 12 and the rotor 13 of the electric motor 10 from G1 (see Fig. 2) to G2 (see Fig. 6) when the vehicle state is the push-walking (power supply cutoff) state is now described.

First, the stepping motor 21 (rotor 21b) is rotated by a prescribed quantity so that the quantity of rotation of the stepping motor 21 (rotor 21b) increases beyond the state shown in Fig. 2 on the basis of the air gap length adjusting command signal output from the vehicle controller 70 (see Fig. 3), as shown in Fig. 6. At this time, the slider 22 moves from the position shown in Fig. 2 in the direction of arrow A1 along the motor rotating shaft 11 since the stepping motor 21 (rotor 21b) and the slider 22 are coupled with each other through the screws while the slider 22 is supported by the slider support member 23 not to corotate with the rotor 21b. The quantity of movement of the slider 22 in the direction of arrow A1 in this case reaches a value responsive to the quantity of rotation of the stepping motor 21 (rotor 21b).

Since the rotor yoke 13a and the motor rotating shaft 11 are coupled with each other through the splines while the protrusion 13c of the rotor yoke 13a and the large-diametral portion 22b of the slider 22 are coupled with each other through the bearing 24, the rotor 13 moves by a prescribed distance (G2 - G1) in the direction of arrow A1 along the motor rotating shaft 11. Thus, the distance between the stator 12 and the rotor 13 in the extensional direction of the motor rotating shaft 11 exceeds the distance between the stator 12 and the rotor 13 in the extensional direction of the motor rotating shaft 11 shown in Fig. 2 by the prescribed distance (G2 - G1). Therefore, the air gap length of the magnetic path formed by the stator 12 and the rotor 13 increases from G1 (see Fig. 2) to G2 (see Fig. 6).

In this case, magnetic resistance with respect to the magnetic path between the stator 12 and the rotor 13 is higher in the case where the air gap length of the magnetic path is G2 (see Fig. 6), as compared with the case where the air gap length of the magnetic path is G1 (see Fig. 2). Therefore, the quantity of magnetic flux between the stator 12 and the rotor 13 decreases in the case where the air gap length of the magnetic path is G2 (see Fig. 6), as compared with the case where the air gap length of the magnetic path is G1 (see Fig. 2).

According to the first embodiment, as hereinabove described, the quantity of change in the quantity of magnetic flux flowing through the magnetic path formed by the rotor 13 and the stator 12 can be increased also when the quantity (G2 - G1) of movement of the rotor 13 in the extensional direction (direction of arrow A1) of the motor rotating shaft 11 is small by adjusting the air gap length by moving the rotor 13 by the prescribed distance (G2 - G1) in the extensional direction (direction of arrow A1) of the motor rotating shaft 11 in the electric motor 10 having such an axial gap type structure that the stator 12 and the rotor 13 are opposed to each other at the prescribed interval in the extensional direction of the motor rotating shaft 11.

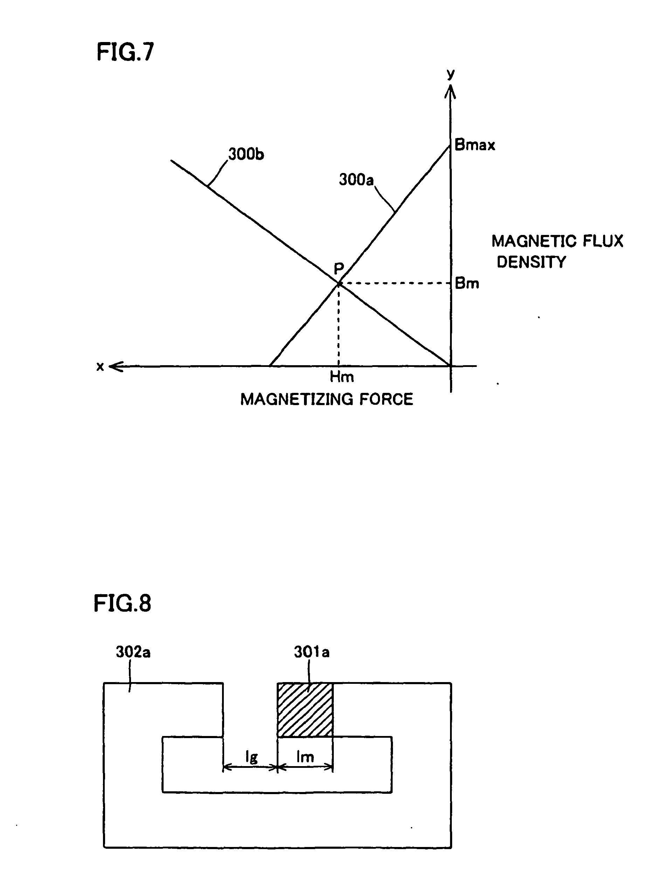

Difference in change of the quantity of magnetic flux between in a case of changing the quantity of magnetic flux by adjusting the air gap length between a rotor (magnet) and a stator (yoke) and a case of changing the quantity of magnetic flux by adjusting the magnitudes of the areas of mutually opposite portions of a rotor (magnet) and a stator (yoke) is now described with reference to Figs. 7 to 9. Bm in Fig. 7 denotes magnetic flux density generated by the magnet, and Hm in Fig. 7 denotes magnetizing force of the magnet. Further, a straight line 300a in Fig. 7 shows a line of B-H (magnetic flux density-magnetizing force) characteristics of the magnet, and another straight line 300b in Fig. 7 shows a line of a permeance coefficient of the magnet. The intersection point P between the straight lines 300a and 300b shows the magnetic flux density (Bm) and the magnetizing force (Hm) of the magnet.

In a model shown in Fig. 8, a permeance coefficient (Bm/Hm) in a case where an air gap length (lg) between a magnet 301a and a yoke 302a changes is obtained through the following equation (1): $Bm / Hm = \left(lm/Am\right) ⋅ \left(Ag/lg\right) ⋅ \left(σ/f\right)$
where lm: magnet length, Am: magnet sectional area, Ag: air gap sectional area, σ: leakage coefficient, f: magnetomotive force loss factor. Assuming that Am = Ag and lm = 1 while ignoring influence by leakage flux (assuming that σ = f = 1), the permeance coefficient (Bm/Hm) results in the following equation (2): $Bm / Hm = 1 / lg$

In other words, the permeance coefficient (Bm/Hm) changes due to change of the air gap length (lg) between the magnet 301a and the yoke 302a.

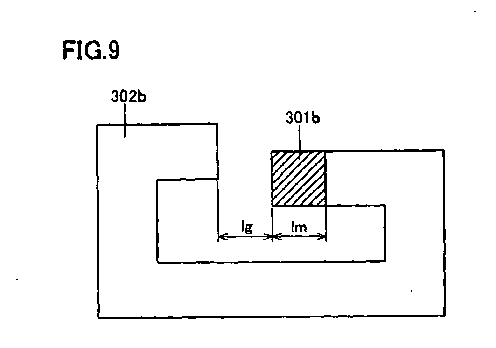

Assuming that Am = Ag and lm = 1 while ignoring influence by leakage flux (assuming that σ = f = 1) as to the permeance coefficient (Bm/Hm) in a case of changing the magnitudes of the areas of mutually opposite portions of a magnet 301b and a yoke 302b as in a model shown in Fig. 9, the permeance coefficient (Bm/Hm) remains unchanged through the above equation (2) since the air gap length (lg) between the magnet 301b and the yoke 302b remains unchanged.

The difference between the quantity of magnetic flux at a time of doubling the air gap length between the magnet 301a and the yoke 302a in the model shown in Fig. 8 and the quantity of magnetic flux at a time of halving the magnitudes of the areas of the mutually opposite portions of the magnet 301b and the yoke 302b as in the model shown in Fig. 8 is now described.

First, the straight lines 300a and 300b in Fig. 7 can be expressed in the following equations (3) and (4) respectively: $y = {μ}_{0} ⁢ x + Bmax$ $y = - \left(Bm/Hm\right) ⁢ x$

µ₀ in the above equation (3) denotes the permeability of vacuum magnetic constant.

In the case of doubling the air gap length between the magnet 301a and the yoke 302a (Am = Ag = 1, lg = 2) in the model shown in Fig. 8, the permeance coefficient (Bm/Hm) reaches Bm/Hm = l/lg = 1/2 through the above equation (2). The magnetizing force (Hm) in this case reaches Hm = -Bmax/(1 + µ₀/2) through the above equations (3) and (4). Thus, the quantity of magnetic flux (Bm·Ag) in the air gap between the magnet 301a and the yoke 302a results in the following equation (5): $Bm ⋅ Ag = \left(Hm/2\right) ⋅ 1 = - Bmax ⁢ \left(2+{μ}_{0}\right)$

In the case of halving the magnitudes of the areas of the mutually opposite portions of the magnet 301b and the yoke 302b (Am = Ag = 1/2, lg = 1) as in the model shown in Fig. 9, the permeance coefficient (Bm/Hm) reaches Bm/Hm = l/lg = 1 through the above equation (2). The magnetizing force (Hm) in this case reaches Hm = -Bmax(1 + µ₀) through the above equations (3) and (4). Thus, the quantity of magnetic flux (Bm·Ag) in the air gap between the magnet 301b and the yoke 302b results in the following equation (6): $Bm ⋅ Ag = Hm \left(1/2\right) = - Bmax ⁢ \left(2+2⁢{μ}_{0}\right)$

Since the permeability of vacuum magnetic constant (µ₀) is at a small value of µ₀ = 4π·10⁻⁷, the term of µ₀ is ignorable. Therefore, it can be said that the quantities of magnetic flux of the air gaps are substantially identical in the case of doubling the air gap length between the magnet 301a and the yoke 302a (equation (5)) and the case of halving the magnitudes of the areas of mutually opposite portions of the magnet 301b and the yoke 302b (equation (6)).

In the positional relation between the magnet and the yoke of the electric motor (rotating electric machine), however, the air gap length is by far smaller than the lengths of edges of the mutually opposite surfaces of the magnet and the yoke. Therefore, the quantity of movement of the magnet 301a or the yoke 302a in the case of doubling the air gap length between the magnet 301a and the yoke 302a can be reduced below the quantity of movement of the magnet 301b or the yoke 302b in the case of halving the magnitudes of the areas of the mutually opposite portions of the magnet 301b and the yoke 302b when changing the quantity of magnetic flux to a prescribed value.

Therefore, it can be said that the quantity of change in the quantity of magnetic flux flowing through the magnetic path formed by the rotor 13 and the stator 12 can be increased in the electric motor 10 according to the first embodiment changing the quantity of magnetic flux by adjusting the air gap length, also when the quantity (G2 - G1) of movement of the stator 13 in the extensional direction (direction of arrow A1) of the motor rotating shaft 11 is small. Thus, the quantity of movement of the rotor 13 can be reduced in a case of changing setting of power generation characteristics and torque output characteristics of the electric motor 10 varying with the quantity of magnetic flux, whereby the electric motor 10 may not be increased in size. Further, the quantity of magnetic flux flowing through the magnetic path formed by the rotor 13 and the stator 12 can be changed in response to the vehicle state by adjusting the air gap length functioning as magnetic resistance on the basis of the signals indicating the vehicle state detected by the vehicle state detecting portion 60, whereby the power generation characteristics and the torque output characteristics of the electric motor 10 varying with the quantity of magnetic flux can be set/changed to characteristics suitable to the vehicle state. Consequently, the electric two-wheeler 100 comprising the electric motor 10 capable of setting/changing the power generation characteristics and the torque output characteristics to characteristics suitable to the vehicle state while attaining downsizing can be obtained according to the first embodiment.

According to the first embodiment, the air gap length adjusting mechanism portion 20 for adjusting the air gap length by moving the rotor 13 in the extensional direction of the motor rotating shaft 11 is provided while this air gap length adjusting mechanism portion 20 (quantity of rotation of the stepping motor 21) is controlled on the basis of the signals indicating the vehicle state, whereby the air gap length between the rotor 13 and the stator 12 can be easily adjusted to the value responsive to the vehicle state. In this case, the rotor 13 can be easily moved in the extensional direction (direction of arrow A1) of the motor rotating shaft 11 with the slider 22 by the value responsive to the quantity of rotation of the stepping motor 21 by moving the slider 22 in the extensional direction (direction of arrow A1) of the motor rotating shaft 11 by the stepping motor 21 while moving the rotor 13 in the extensional direction (direction of arrow A1) of the motor rotating shaft 11 by the slider 22.

According to the first embodiment, the vehicle controller 70 for controlling the quantity of rotation of the stepping motor 21 on the basis of the signals indicating the vehicle state is so provided that the quantity of rotation of the stepping motor 21 can be easily controlled to reach the value responsive to the vehicle state with the vehicle controller 70.

According to the first embodiment, the vehicle controller 70 is enabled to determine whether the vehicle state is a normal traveling state or a push-walking (power supply cutoff) state, whereby the quantity of rotation of the stepping motor 21 can be controlled to reach the value suitable to normal traveling with the vehicle controller 70 in the normal traveling state while the quantity of rotation of the stepping motor 21 can be controlled to reach the value suitable to push-walking with the vehicle controller 70 in the push-walking state. Consequently, setting of the power generation characteristics and the torque output characteristics of the electric motor 10 can be easily changed in response to the vehicle state (the case of the normal traveling state and the case of the push-walking state). In the case of the push-walking (current supply cutoff) state, a load with respect to rotation of the rotor 13 constituting the electric motor 10 can be reduced by adjusting the air gap length so that the quantity of magnetic flux decreases, whereby it is possible to attain push-walkability.

According to the first embodiment, the quantity of magnetic flux between the stator 12 and the rotor 13 can be increased by increasing the air gap length between the stator 12 and the rotor 13 by forming the stator 12 and the rotor 13 so that the air gap length between the stator 12 and the rotor 13 is adjustable, whereby the torque output of the electric motor 10 can be increased. Thus, there is no need to increase the driving current supplied to the electric motor 10 in order to increase the torque output of the electric motor 10, whereby the driving current supplied to the electric motor 10 can be inhibited from increase.

### (Second Embodiment)

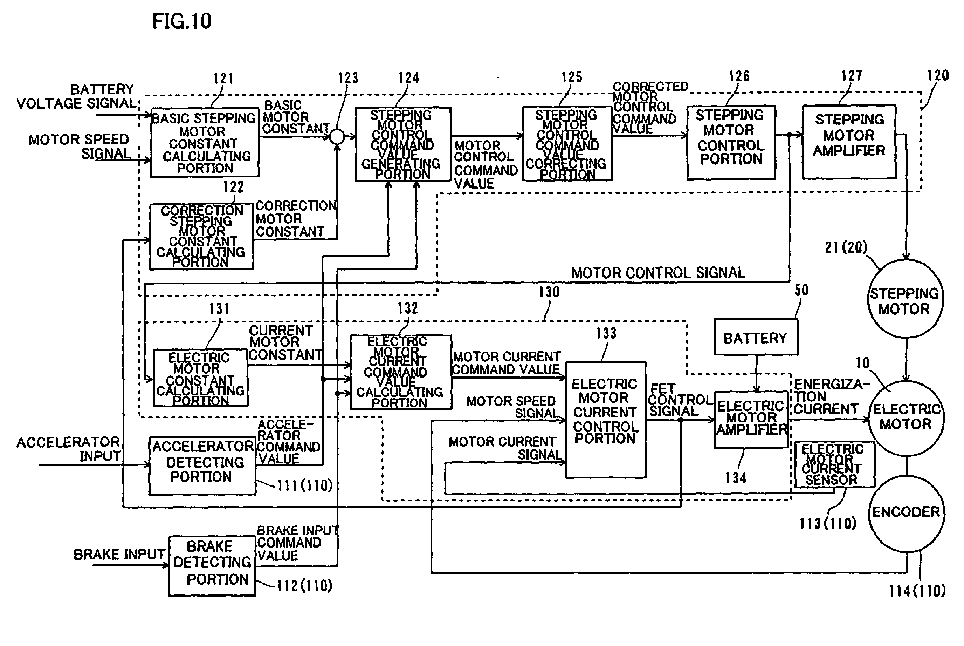

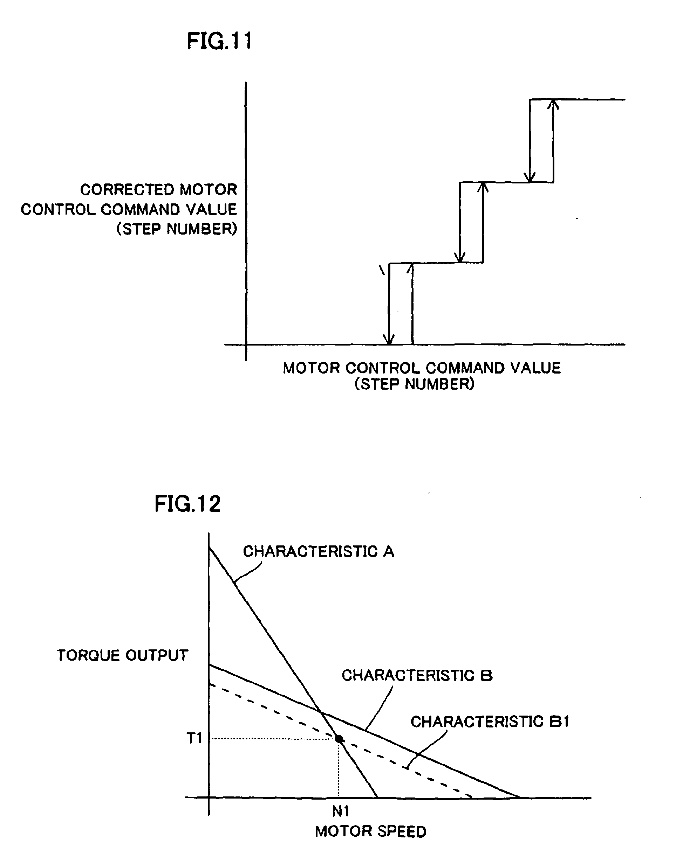

Referring to Figs. 10 and 11, a case of correcting a control signal for controlling the quantity of rotation of a stepping motor dissimilarly to the aforementioned first embodiment is described in this second embodiment. The structure of an electric motor 10 according to the second embodiment other than a control system is similar to that of the aforementioned first embodiment.

The control system for the electric motor 10 according to this second embodiment comprises a vehicle state detecting portion 110, a stepping motor (air gap length adjusting mechanism portion) driving control portion 120 and an electric motor driving control portion 130, as shown in Fig. 10. The stepping motor driving control portion 120 is an example of the "adjustment motor control portion" in the present invention.

The stepping motor driving control portion 120 is connected to a stepping motor 21 (air gap length adjusting mechanism portion 20). The electric motor driving control portion 130 is connected to the electric motor 10. A battery 50 is connected to the electric motor 10 through the electric motor driving control portion 130.

The vehicle state detecting portion 110 includes an accelerator detecting portion 111, a brake detecting portion 112, an electric motor current sensor 113 and an encoder 114.

The stepping motor driving control portion 120 includes a basic stepping motor constant calculating potion 121, a correction stepping motor constant calculating portion 122, an adder 123, a stepping motor control command value generating portion 124, a stepping motor control command value correcting potion 125, a stepping motor control portion 126 and a stepping motor amplifier 127.

The electric motor driving control portion 130 includes an electric motor constant calculating portion 131, an electric motor current command value calculating portion 132, an electric motor current control portion 133 and an electric motor amplifier 134.

In the vehicle state detecting portion 110, the accelerator detecting portion 111 has a function of generating, when an accelerator (not shown) is operated by a user, an accelerator command value responsive to the opening of the accelerator. Further, the accelerator detecting portion 111 also has a function of outputting a signal responsive to the accelerator command value to the stepping motor control command value generating portion 124 and the electric motor current command value calculating portion 132. The brake detecting portion 112 has a function of generating, when a brake (not shown) is operated by the user, a brake input command value responsive to the state of the brake. Further, the brake detecting portion 112 also has a function of outputting a signal responsive to the brake input command value to the stepping motor control command value generating portion 124 and the electric motor current command value calculating portion 132.

The electric motor current sensor 113 has a function of generating a motor current signal by detecting a current flowing between the electric motor 10 and the electric motor amplifier 134 and outputting this motor current signal to the electric motor current control portion 133. The encoder 114 has a function of generating a motor speed signal by detecting the speed of the electric motor 10 and outputting this motor speed signal to the basic stepping motor constant calculating portion 121 and the electric motor current control portion 133.

In the stepping motor driving control portion 120, the basic stepping motor constant calculating portion 121 has a function of calculating a basic motor constant for setting the basic quantity of rotation of the stepping motor 21 on the basis of the motor speed signal from the encoder 114 and a battery voltage signal indicating the voltage of the battery 50. Further, the basic stepping motor constant calculating potion 121 also has a function of outputting a signal responsive to the basic motor constant to the adder 123.

The correction stepping motor constant calculating portion 122 has a function of calculating a correction motor constant for correcting the quantity of rotation of the stepping motor 211 on the basis of an FET control signal described later. Further, the correction stepping motor constant calculating portion 122 also has a function of outputting a signal responsive to the correction motor constant to the adder 123. The adder 123 has a function of adding the basic motor constant from the basic stepping motor constant calculating portion 121 and the correction motor constant from the correction stepping motor constant calculating portion 122 to each other and outputting the result to the stepping motor control command value generating portion 124.

The stepping motor control command value generating portion 124 has a function of generating a motor control command value for controlling the quantity of rotation of the stepping motor 21 on the basis of the sum of the basic motor constant and the correction motor constant from the adder 123, the accelerator command value from the accelerator detecting portion 111 and the brake input command value from the brake detecting portion 112. Further, the stepping motor control command value generating portion 124 also has a function of outputting a signal responsive to the motor control command value to the stepping motor control command value correcting portion 125.

The stepping motor control command value correcting portion 125 has a function of generating a corrected motor control command value by correcting the motor control command value from the stepping motor control command value generating portion 124. Further, the stepping motor control command value correcting portion 125 also has a function of outputting a signal responsive to the corrected motor control command value to the stepping motor control portion 126. A motor control command value correction table (see Fig. 11) associating motor control command values and corrected motor control command values with each other is stored in the stepping motor control command value correcting portion 125. In this motor control command value correction table, the corrected motor control command values with respect to the motor control command values are set in consideration of hysteresis errors of the stepping motor 21, as shown in Fig. 11.

The stepping motor control portion 126 has a function of generating a motor control signal for controlling the quantity of rotation of the stepping motor 21 on the basis of the corrected motor control command value from the stepping motor control command value correcting portion 125, as shown in Fig. 10. Further, the stepping motor control portion 126 also has a function of outputting the motor control signal to the stepping motor amplifier 127 and the electric motor constant calculating portion 131. The stepping motor amplifier 127 has a function of controlling supply of a driving current to the stepping motor 21 on the basis of the motor control signal from the stepping motor control portion 126.

In the electric motor driving control portion 130, the electric motor constant calculating portion 131 has a function of calculating a current motor constant indicating the current output torque of the electric motor 10 on the basis of the motor control signal from the stepping motor control portion 126. Further, the electric motor constant calculating portion 131 also has a function of outputting a signal responsive to the current motor constant to the electric motor current command value calculating portion 132. The electric motor current command value calculating portion 132 has a function of calculating a motor current command value for setting the driving current value of the electric motor 10 on the basis of the accelerator command value from the accelerator detecting portion 111, the brake input command value from the brake detecting portion 112 and the current motor constant from the electric motor constant calculating portion 131. Further, the electric motor current command value calculating portion 132 also has a function of outputting a signal responsive to the motor current command value to the electric motor current control portion 133.

The electric motor current control portion 133 has a function of generating the FET control signal for controlling driving of a field-effect transistor (FET: Field Effect Transistor) in the electric motor amplifier 134 described later on the basis of the motor current command value from the electric motor current command value calculating portion 132, the motor current signal from the electric motor current sensor 113 and the motor speed signal from the encoder 114. Further, the electric motor current control portion 133 also has a function of outputting the FET control signal to the correction stepping motor constant calculating portion 122 and the electric motor amplifier 134. The electric motor amplifier 134 includes the field-effect transistor (not shown) connected to the respective ones of the three wires linked to the electric motor 10. Further, the electric motor amplifier 134 has a function of controlling supply of the driving current to the electric motor 10 on the basis of the FET control signal from the electric motor current control portion 133.

Operations at the time when the air gap length is actually adjusted by the control method according to the second embodiment shown in Fig. 10 are now described.

First, in the stepping motor driving control portion 120 shown in Fig. 10, the motor speed signal from the encoder 114 and the battery voltage signal indicating the voltage of the battery 50 are input in the basic stepping motor constant calculating portion 121. Thus, the basic motor constant is calculated in the basic stepping motor constant calculating portion 121. The basic motor constant M is calculated through the following equation (11): $M = \left(V⁢1-V⁢2\right) / N$
where V1: battery voltage, V2: voltage margin, and N: motor speed. The battery voltage V1 is a battery voltage in calculation of the basic motor constant, and is a value fluctuating in response to the vehicle state. The voltage margin V2 is a value set in consideration of the quantity of fluctuation of the battery voltage V1. The motor speed N is the speed of the electric motor 10. In other words, the basic motor constant in the second embodiment is calculated on the basis of a battery voltage lower than the battery voltage in calculation of the basic motor constant. Thereafter the signal responsive to the basic motor constant is output from the basic stepping motor constant calculating portion 121 to the adder 123.

The FET control signal from the electric motor current control portion 133 is input in the correction stepping motor constant calculating portion 122. Thus, the correction motor constant is calculated in the correction stepping motor constant calculating portion 122 on the basis of the FET control signal. Thereafter the signal responsive to the correction motor constant is output from the correction stepping motor constant calculating portion 122 to the adder 123.

Then, the basic motor constant and the correction motor constant are added to each other in the adder 123 and the result is output to the stepping motor control command value generating portion 124.

Then, the motor control command value is generated in the stepping motor command value generating portion 124 in the following manner: First, a first adjusted value is obtained on the basis of a map (not shown) associating the sum of the basic motor constant and the correction motor constant and the accelerator command value from the accelerator detecting portion 111 with each other. Further, a second adjusted value is obtained on the basis of another map (not shown) associating the first adjusted value and the brake input command value from the brake detecting portion 112 with each other. Then, the motor control command value is generated on the basis of this second adjusted value. Thereafter the signal responsive to the motor control command value is output from the stepping motor control command value generating portion 124 to the stepping motor control command value correcting portion 125.

Then, the corrected motor control command value responsive to the motor control command value from the stepping motor control command value generating portion 124 is read from the motor control command value correction table shown in Fig. 11 in the stepping motor control command value correcting portion 125. Thereafter the corrected motor control command value is output from the stepping motor control command value correcting portion 125 to the stepping motor control portion 126.

Then, the motor control signal for controlling the quantity of rotation of the stepping motor 21 is generated in the stepping motor control portion 126 on the basis of the corrected motor control command value from the stepping motor control command value correcting portion 125. Thereafter the motor control signal is output to the stepping motor amplifier 127 and the electric motor constant calculating portion 131.

Then, according to the second embodiment, supply of the driving current to the stepping motor 21 is controlled by the stepping motor amplifier 127 on the basis of the motor control signal from the stepping motor control portion 126. In other words, the quantity of rotation of the stepping motor 21 is controlled on the basis of the signals (the accelerator command value, the brake input command value, the motor speed signal and the battery voltage signal) indicating the vehicle state. Thus, the air gap length (quantity of magnetic flux) of a magnetic flux formed in the electric motor 10 is changed in response to the vehicle state, similarly to the first embodiment shown in Fig. 6.

In the electric motor driving control portion 130 shown in Fig. 10, the motor control signal from the stepping motor control portion 126 is input in the electric motor constant calculating portion 131, whereby the current motor constant is calculated on the basis of the motor control signal. Thereafter the signal responsive to the current motor constant is output from the electric motor constant calculating portion 131 to the electric motor current command value calculating portion 132.

Then, the accelerator command value from the accelerator detecting portion 111 and the brake input command value from the brake detecting portion 112 are input in the electric motor current command value calculating portion 132, in addition to the signal responsive to the current motor constant. The accelerator command value and the brake input command value are added to each other and the motor current command value is calculated on the basis of the added values and the current motor constant in the electric motor current command value calculating portion 132. Thereafter the signal responsive to the motor current command value is output from the electric motor current command value calculating portion 132 to the electric motor current control portion 133.

Then, the motor current signal from the electric motor current sensor 113 and the motor speed signal from the encoder 114 are input in the electric motor current control portion 133, in addition to the signal responsive to the motor current command value. Then, the FET control signal is generated in the electric motor current control portion 133 on the basis of the motor current command value, the motor current signal and the motor speed signal. Thereafter the FET control signal is output from the electric motor current control portion 133 to the electric motor amplifier 134.

Then, the field-effect transistor (not shown) in the electric motor amplifier 134 is driven in the electric motor amplifier 134 on the basis of the FET control signal. Thus, supply of the driving current from the battery 50 to the electric motor 10 is controlled on the basis of the signals (the accelerator command value, the brake input command value, the motor speed signal and the motor current signal) indicating the vehicle state and the motor control signal for controlling the quantity of rotation of the stepping motor 21. Further, supply of the charging current from the electric motor 10 to the battery 50 is also controlled on the basis of the signals indicating the vehicle state and the motor control signal.

According to the second embodiment, as hereinabove described, the air gap length (quantity of magnetic flux) can be adjusted with the stepping motor 21 so that an induced voltage generated by the electric motor 10 lowers below the voltage of the battery 50 by calculating the basic motor constant for setting the basic quantity of rotation of the stepping motor 21 in the basic stepping motor constant calculating portion 121 on the basis of the battery voltage lower than the battery voltage in calculation of the basic motor constant. Thus, the charging current supplied to the battery 50 through the electric motor amplifier 134 can be inhibited from excessively increasing, whereby it is possible to suppress occurrence of such inconvenience that the battery 50 becomes easy to consume due to overcharge of the battery 50. Therefore, reliability of an electric two-wheeler including the battery 50 can be improved. Further, it is possible to suppress flow of an excess current to the field-effect transistor in the electric motor amplifier 134 when the charging current is supplied to the battery 50 through the electric motor amplifier 134, whereby it is also possible to inhibit the field-effect transistor from becoming easy to break. Thus, reduction of the characteristics of the electric motor 10 whose driving is controlled by the control system including the electric motor amplifier 134 can be suppressed.

According to the second embodiment, the torque output characteristics with respect to the motor speed of the electric motor 10 can be set/changed to characteristics responsive to the vehicle state by forming the control system so that the air gap length (quantity of magnetic flux) of the electric motor 10 is adjustable in response to the vehicle state. In a case of setting/changing any characteristic of the electric motor 10 from a characteristic corresponding to high-torque low-speed rotation (characteristic A) to another characteristic corresponding to low-torque high-speed rotation (characteristic B) as shown in Fig. 12, for example, the quantity of magnetic flux can be reduced as compared with the state of the characteristic A by increasing the air gap length of the electric motor 10 beyond the state of the characteristic A. Thus, the characteristic of the electric motor 10 can be set/changed from the characteristic corresponding to high-torque low-speed rotation (characteristic A) to the characteristic corresponding to low-torque high-speed rotation (characteristic B).

When a request torque at the time when the motor speed is N1 is T1 (black circle in Fig. 12) in the characteristic diagram shown in Fig. 12, the air gap length may be adjusted to the value responsive to high-torque low-speed rotation (characteristic A) by controlling the quantity of rotation of the stepping motor 21. In a case of setting the torque at the time when the motor speed is N1 to T1 in a state holding the characteristic corresponding to low-torque high-speed rotation, the torque at the time when the motor speed is N1 can be set to T1 in the state holding the characteristic corresponding to low-torque high-speed rotation when controlling the driving current supplied to the electric motor 10 to decrease (see a characteristic B1).

According to the second embodiment, the stepping motor control command value correcting portion 125 for correcting the motor control command value generated by the stepping motor control command value generating portion 124 is so provided that the corrected motor control command value set in consideration of the hysteresis error can be output from the stepping motor control command value correcting portion 125 since the motor control command value correction table in consideration of hysteresis errors of the stepping motor 21 is stored in the stepping motor control command value correcting portion 125. Thus, control of the quantity of rotation (step number) of the stepping motor 21 can be inhibited from repetition also when the quantity of rotation (step number) of the stepping motor 21 and the motor control command value do not coincide with each other due to occurrence of a hysteresis error of the stepping motor 21.

According to the second embodiment, the control system is so formed that the air gap length (quantity of magnetic flux) in the electric motor 10 is adjustable, whereby the quantity of magnetic flux can be reduced by increasing the air gap length in a case of cutting off the current flowing through the electric motor 10 and the electric motor amplifier 134 when abnormality takes place in the electric two-wheeler, so that power generation in the electric motor 10 can be inhibited from increase. Thus, the current can be easily inhibited from flowing between the electric motor 10 and the electric motor amplifier 134. In this case, the quantity of magnetic flux is reduced by increasing the air gap length, whereby the load with respect to rotation of the electric motor 10 can be reduced. Thus, it is possible to attain push-walkability when abnormality takes place in the electric two-wheeler.

The remaining effects of the second embodiment are similar to those of the aforementioned first embodiment.

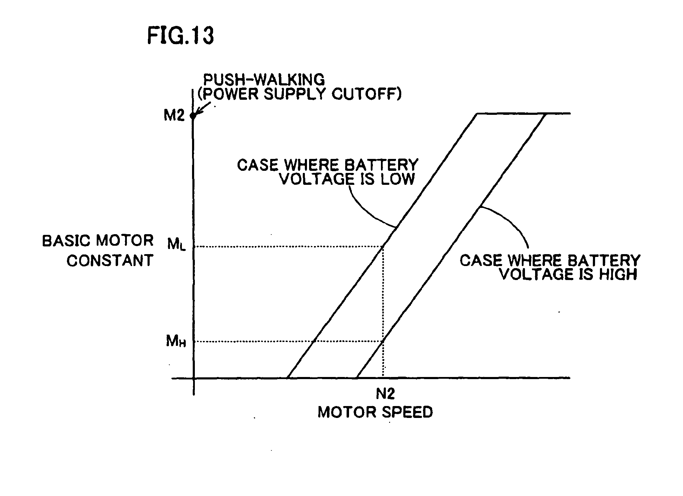

As a modification of the control system according to the aforementioned second embodiment, a basic motor constant read table shown in Fig. 13 may be stored in the basic stepping motor constant calculating portion 121. More specifically, motor speeds and basic motor constants with respect to battery voltages are set in the basic motor constant read table of Fig. 13. Further, two types of battery voltages in a case where the battery voltage is high and a case where the battery voltage is low are set in the basic motor constant read table of Fig. 13. In addition, a basic motor constant (M_{L} in Fig. 13) corresponding to the case where the battery voltage is low is set to exceed a basic motor constant (M_{H} in Fig. 13) corresponding to the case where the battery voltage is high when the motor speed is at a prescribed value N2. Thus, the basic motor constant read from the basic motor constant read table of Fig. 13 can be easily changed in the case where the battery voltage is high and the case where the battery voltage is low. The basic motor constant in the case where the motor speed is zero (a case of push-walking or power supply cutoff) is set to M2 in Fig. 13.

### (Third Embodiment)

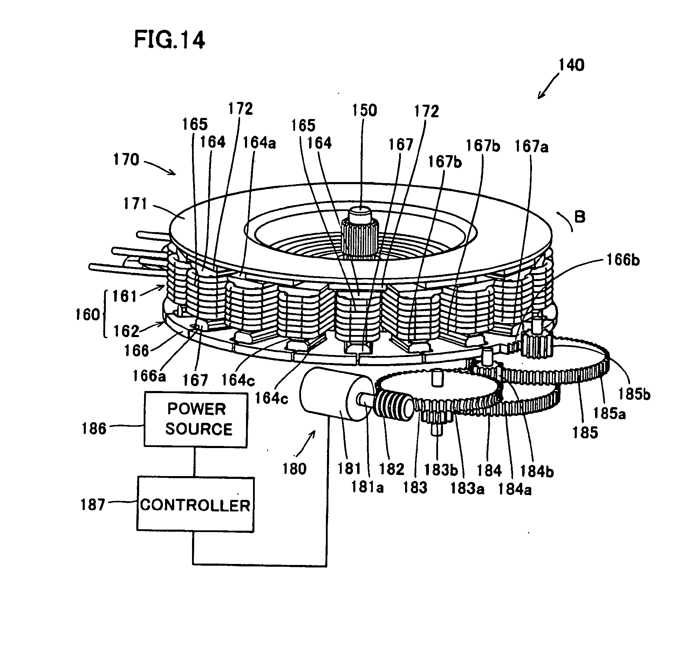

Referring to Figs. 14 to 16 and 18 to 20, a case of dividing a stator constituting an electric motor into two dissimilarly to the aforementioned first and second embodiments is described in this third embodiment.

An electric motor 140 according to this third embodiment comprises a motor rotating shaft 150, a stator 160, a rotor 170 and a rotation driving portion 180, as shown in Fig. 14. The motor rotating shaft 150 is an example of the "rotating shaft" in the present invention. The electric motor 140 according to the third embodiment has such an axial gap type structure that the stator 160 and the rotor 170 are opposed to each other at a prescribed interval in the extensional direction of the motor rotating shaft 150. Further, the electric motor 140 according to the third embodiment is mounted on an electric two-wheeler (not shown) similar to the electric two-wheeler 100 according to the first embodiment shown in Fig. 1.

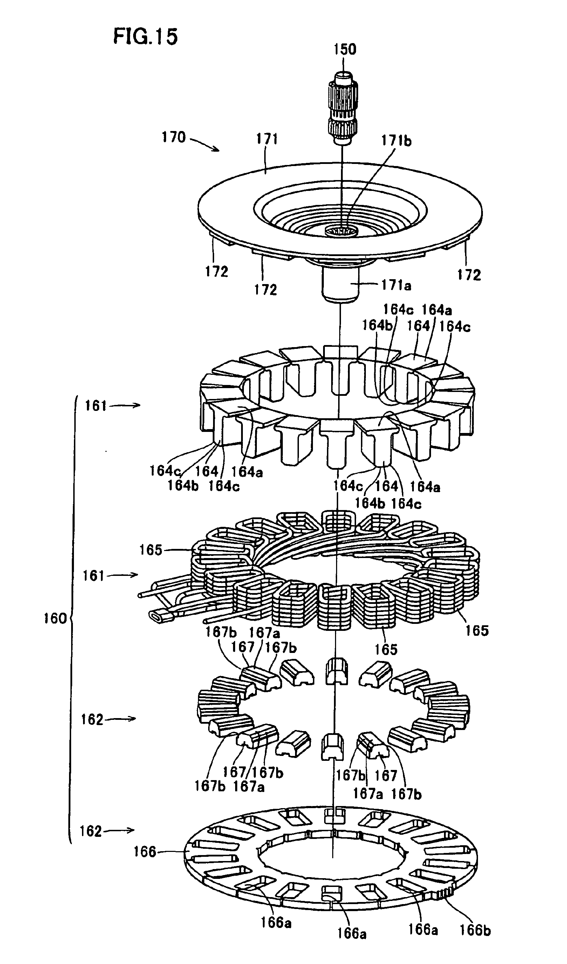

According to the third embodiment, the stator 160 is divided into two, i.e., a first stator 161 and a second stator 162, as shown in Figs. 14 and 15. The first stator 161 and the second stator 162 are opposed to each other at a prescribed interval in the extensional direction of the motor rotating shaft 150, while the first stator 161 is opposed to the rotor 170. The second stator 162 is enabled to rotate in the rotational direction (direction of arrow B) of the rotor 170 about the axial core of the motor rotating shaft 150 serving as the rotation center.

As the specific structure of the stator 160, the first stator 161 includes a plurality of first teeth 164 and a plurality of coils 165. The first teeth 164 are examples of the "first core members" in the present invention. The plurality of first teeth 164 are annularly arranged at a prescribed interval from each other. First end surfaces 164a of the first teeth 164 have a larger area than second end surfaces 164b (see Fig. 15) opposite to the first end surfaces 164a. Therefore, the interval between the first end surfaces 164a of adjacent first teeth 164 is smaller than the interval between the second end surfaces 164b. Further, the first end surfaces 164a of the first teeth 164 are opposed to the rotor 170. In addition, ends 164c (see Fig. 15) of the first teeth 164 closer to the second end surfaces 164b are chamfered. The plurality of coils 165 are mounted on the respective ones of the plurality of first teeth 164 respectively. The coils 165 are not mounted on portions of the first end surfaces 164a of the first teeth 164.

The second stator 162 includes a stator yoke 166 and a plurality of second teeth 167. The second teeth 167 are examples of the "second core members" in the present invention. The stator yoke 166 is annularly formed, and has a plurality of annularly arranged hole portions 166a. A gear engaging portion 166b is provided on a prescribed region of the outer peripheral surface of the stator yoke 166. The plurality of second teeth 167 are mounted on the respective ones of the annularly arranged plurality of hole portions 166a of the stator yoke 166 respectively, so that prescribed end surfaces 167a of the second teeth 167 protrude toward the first stator 161. Ends 167b of the second teeth 167 closer to the protruding end surfaces 167a are chamfered.

The rotor 170 includes a rotor yoke 171 and a plurality of magnets 172. The rotor yoke 171 is formed in the shape of a disc, while a protrusion 171a protruding toward the stator 160 is formed on the central portion of the rotor yoke 171. A hole portion 171b is formed in the central portion of the rotor yoke 171. The motor rotating shaft 150 is fitted into this hole portion 171b of the rotor yoke 171, so that the rotor yoke 171 corotates with the motor rotating shaft 150. The plurality of magnets 172 include a plurality of magnets 172 of north poles and a plurality of magnets 172 of south poles, and are mounted on a surface of the rotor yoke 171 closer to the stator 160. In the plurality of magnets 172, the north poles and the south poles are alternately arranged at a prescribed interval along the circumferential direction of the discoid rotor yoke 171.

As shown in Fig. 14, the rotation driving portion 180 is provided for rotating the second stator 162 constituting the stator 160 in the rotational direction (direction of arrow B) of the rotor 170. This rotating driving portion 180 includes a motor 181, a worm gear 182 and gears 183, 184 and 185. The worm gear 182 is mounted on a rotating shaft 181a of the motor 181, and meshed with a large-diametral gear portion 183a of the gear 183. A large-diametral gear portion 184a of the gear 184 is meshed with a small-diametral gear portion 183a of the gear 183, while a small-diametral gear portion 184b of the gear 184 is meshed with a large-diametral gear portion 185a of the gear 185. Further, a small-diametral gear portion 185b of the gear 185 is meshed with the gear engaging portion 166b of the stator yoke 166 of the second stator 162. Thus, the power of the motor 181 is transmitted to the stator yoke 166 through the worm gear 182 and the gears 183 to 185, whereby the second stator 162 is rotated in the rotational direction (direction of arrow B) of the rotor 170. A driving current is supplied to the motor 181 from a power source 186 through a controller 187.

According to this third embodiment, a signal indicating the vehicle state output from an unillustrated vehicle state detecting portion is input in the controller 187. Supply of the driving current from the power source 186 to the motor 181 is controlled by the controller 187 on the basis of the signal indicating the vehicle state.

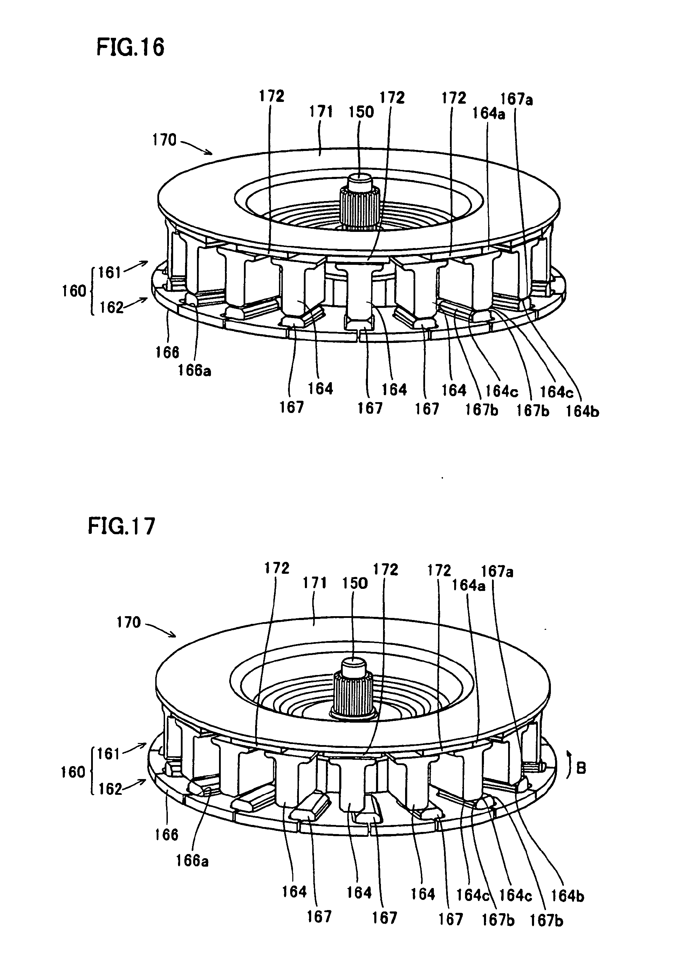

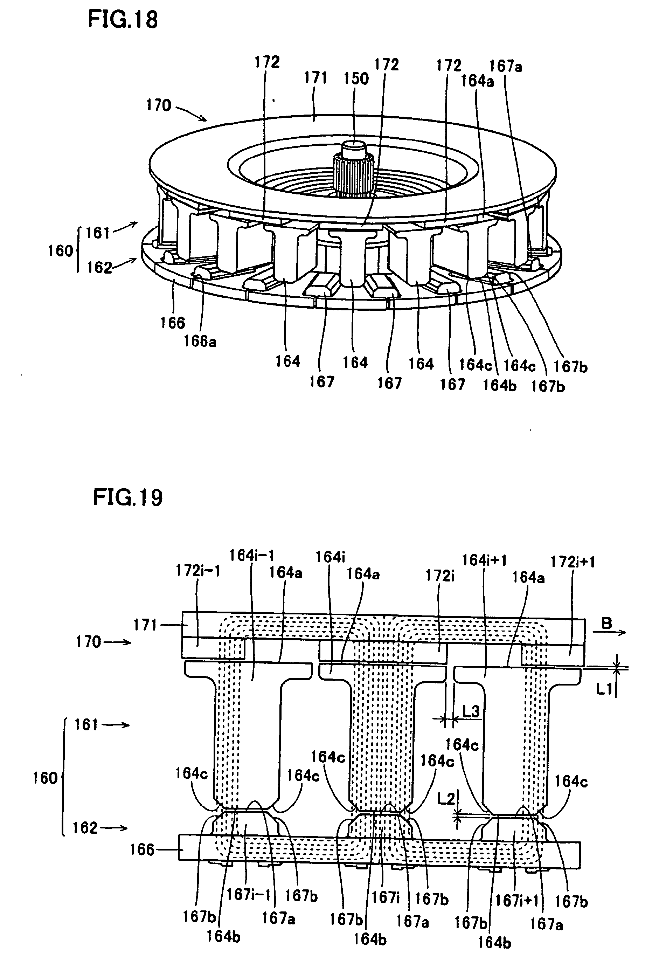

In the electric motor 140 according to the third embodiment, magnetic paths (broken lines in Fig. 19) are formed by the rotor 170, the first stator 161 and the second stator 162 when the first teeth 164 and the second teeth 167 are opposite to each other, as shown in Figs. 16 and 19. When the first teeth 164 and the second teeth 167 are opposite to each other, the distance L1 between the first teeth 164 and the magnets 172 and the distance L2 between the first teeth 164 and the second teeth 167 are air gap lengths functioning as magnetic resistance with respect to the magnetic paths.

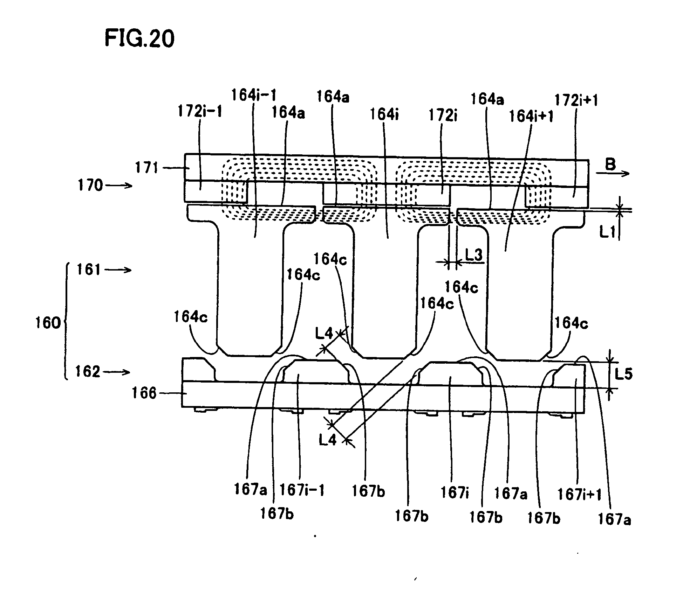

When the second teeth 167 move to positions not opposite to the first teeth 164, magnetic paths (broken lines in Fig. 20) are formed by the rotor 170 and the first stator 161, as shown in Figs. 18 and 20. When the second teeth 167 move to the positions not opposite to the first teeth 164, the distance L1 between the first teeth 164 and the magnets 172 and the distance L3 between the adjacent first teeth 164 on the sides of the end surfaces 164a are the air gap lengths functioning as magnetic resistance with respect to the magnetic paths.

Figs. 19 and 20 illustrate a prescribed magnet 172 as 172i and illustrate the magnet 172 adjacent to the prescribed magnet 1721 in the direction of arrow B (rotational direction of the rotor 170) as 172i+1, while illustrating the magnet 172 adjacent to the prescribed magnet 172i in the direction opposite to the direction of arrow B as 172i-1. Further, these figures illustrate a prescribed first tooth 164 as 164i and illustrate the first tooth 164 adjacent to the prescribed first tooth 164i in the direction of arrow B as 164i+1, while illustrating the first tooth 164 adjacent to the prescribed first tooth 164i in the direction opposite to the direction of arrow B as 167i-1. Figs. 19 and 20 illustrate no coils 165, in order to simplify the drawings.

A method of adjusting the air gap lengths in the electric motor 140 according to the third embodiment is now described with reference to Figs. 14 and 16 to 20.

In a case of rotating the electric motor 140 with a high torque at a high speed, the second stator 162 is not rotated but held on a position of an initial state, as shown in Fig. 16. In other words, the second stator 162 is so held that the second teeth 167 are opposite to the first teeth 164. In this case, the magnetic paths (broken lines in Fig. 19) which are paths of magnetic flux are formed in the rotor 170, the first stator 161 and the second stator 162, as shown in Fig. 19.

When the second teeth 167 are opposite to the first teeth 164 as shown in Fig. 19, the distance (air gap length) L1 between the first teeth 164 and the magnets 172 is so extremely small that magnetic resistance between the first teeth 164 and the magnets 172 lowers. Further, the distance (air gap length) L2 between the first teeth 164 and the second teeth 167 is so extremely small that magnetic resistance between the first teeth 164 and the second teeth 167 lowers. The distance L1 between the first teeth 164 and the magnets 172 and the distance L2 between the first teeth 164 and the second teeth 167 are substantially identical distances.

On the other hand, the distance L3 between the adjacent first teeth 164 on the sides of the end surfaces 164a exceeds the distance (air gap length) L2 between the first teeth 164 and the second teeth 167. In other words, magnetic resistance between the adjacent first teeth 164 on the sides of the end surfaces 164a exceeds the magnetic resistance between the first teeth 164 and the second teeth 167. The distance L2 between the first teeth 164 and the second teeth 167 and the distance L3 between the adjacent first teeth 164 on the sides of the end surfaces 164a satisfy the relational expression 2 × L2 < L3.

Thus, magnetic flux generated between the magnet 172i (north pole, for example) and the magnet 172i-1 (south pole, for example) is hardly transmitted through the air gap between the first tooth 164i and the first tooth 164i-1 on the sides of the end surfaces 164a. Therefore, the magnetic flux generated between the magnet 172i and the magnet 172i-1 flows through the air gap between the magnet 172i and the first tooth 164i, the first tooth 164i, the air gap between the first tooth 164i and the second tooth 167i, the second tooth 167i, the stator yoke 166, the second tooth 167i-1, the air gap between the second tooth 167i-1 and the first tooth 164i-1, the first tooth 164i-1, the air gap between the first tooth 164i-1 and the magnet 172i-1 and the rotor yoke 171 in this order.

Further, magnetic flux generated between the magnet 172i (north pole, for example) and the magnet 172i+1 (south pole, for example) is hardly transmitted through the air gap between the first tooth 164i and the first tooth 164i+1 on the sides of the end surfaces 164a. Therefore, the magnetic flux generated between the magnet 172i and the magnet 172i+1 flows through the air gap between the magnet 172i and the first tooth 164i, the first tooth 164i, the air gap between the first tooth 164i and the second tooth 167i, the second tooth 167i, the stator yoke 166, the second tooth 167i+1, the air gap between second tooth 167i+1 and the first tooth 164i+1, the first tooth 164i+1, the air gap between the first tooth 164i+1 and the magnet 172i+1 and the rotor yoke 171 in this order.

When the magnet 172i becomes a south pole and the magnets 172i+1 and 172i-1 become north poles, the directions of flow of magnetic flux are reversed dissimilarly to the aforementioned case where the magnet 172i is a north pole and the magnets 172i+1 and 172i-1 are south poles.

When rotating the electric motor 140 with a low torque at a high speed from the state of Fig. 16, the second stator 162 is rotated in the rotational direction (direction of arrow B) of the rotor 170 with the rotation driving portion 180 (see Fig. 14), as shown in Fig. 17. Thus, the second teeth 167 are moved to regions corresponding to the centers between the adjacent first teeth 164 so that the second teeth 167 are not opposite to the first teeth 164, as shown in Fig. 18. In this case, the magnetic paths (broken lines in Fig. 20) which are paths of magnetic flux are formed in the rotor 170 and the first stator 161, as shown in Fig. 20.

When the second teeth 167 are not opposite to the first teeth 164, the distance (air gap length) between the first teeth 164 and the second teeth 167 increases from L2 (see Fig. 19) to L4, as shown in Fig. 20. Therefore, the distance (air gap length) L3 between the adjacent first teeth 164 on the sides of the end surfaces 164a decreases below the distance L4 between the first teeth 164 and the second teeth 167. In other words, magnetic resistance between the adjacent first teeth 164 on the sides of the end surfaces 164a decreases below the magnetic resistance between the first teeth 164 and the second teeth 167.

The distance L5 between the first teeth 164 and the stator yoke 166 exceeds the distance L4 between the first teeth 164 and the second teeth 167. In other words, the magnetic resistance between the first teeth 164 and the stator yoke 166 exceeds the magnetic resistance between the first teeth 164 and the second teeth 167. Therefore, it is obvious that no magnetic path is formed between the first teeth 164 and the stator yoke 166, whereby the magnetic resistance between the first teeth 164 and the stator yoke 166 is ignorable.

Thus, the magnetic flux generated between the magnet 172i (north pole, for example) and the magnet 172i-1 (south pole, for example) flows through the air gap between the magnet 172i and the first tooth 164i, a portion of the first tooth 164i closer to the end surface 164a, the air gap between the first tooth 164i and the first tooth 164i-1 on the sides of the end surfaces 164a, the portion of the first tooth 1641-1 closer to the end surface 164a, the air gap between the first tooth 164i-1 and the magnet 172i-1 and the rotor yoke 171 in this order.

Further, the magnetic flux generated between the magnet 172i (north pole, for example) and the magnet 172i+1 (south pole, for example) flows through the air gap between the magnet 172i and the first tooth 164i, the portion of the first tooth 164i closer to the end surface 164a, the air gap between the first tooth 164i and the first tooth 164i+1 on the sides of the end surfaces 164a, a portion of the first tooth 164i+1 closer to the end surface 164a, the air gap between the first tooth 164i+1 and the magnet 172i+1 and the rotor yoke 171 in this order.

When the magnet 172i becomes a south pole and the magnets 172i+1 and 172i-1 become north poles, the directions of flow of magnetic flux are reversed dissimilarly to the aforementioned case where the magnet 172i is a north pole and the magnets 172i+1 and 172i-1 are south poles.

In other words, substantially no magnetic flux flows to portions of the first teeth 164 mounted with the coils 165 (see Fig. 14) in the case of rotating the electric motor 140 with a low torque at a high speed in the third embodiment.

In the case where the second teeth 167 are opposite to the first teeth 164 shown in Fig. 19, the air gap length functioning as the magnetic resistance with respect to the magnetic paths is 2 × L1 + 2 × L2. In the case where the second teeth 167 are not opposite to the first teeth 164 shown in Fig. 20, the air gap length functioning as the magnetic resistance with respect to the magnetic paths is 2 × L1 + L3. L2 and L3 satisfy the relational expression 2 × L2 < L3, whereby the air gap length functioning as the magnetic resistance with respect to the magnetic paths decreases in the case where the second teeth 167 are opposite to the first teeth 164 shown in Fig. 19, as compared with the case where the second teeth 167 are not opposite to the first teeth 164 shown in Fig. 20. Therefore, the quantity of magnetic flux increases in the case where the second teeth 167 are opposite to the first teeth 164 shown in Fig. 19, as compared with the case where the second teeth 167 are not opposite to the first teeth 164 shown in Fig. 20.

According to the third embodiment, as hereinabove described, the stator 160 is divided into two, i.e., the first stator 161 and the second stator 162 while the second stator 162 is so rotated in the rotational direction of the rotor 170 as to adjust the air gap lengths, whereby the quantity of magnetic flux can be easily changed by rendering the magnitude of the air gap length (2 × L1 + 2 × L2) of the magnetic paths formed in the initial state not rotating the second stator 162 and the magnitude of the air gap length (2 × L1 + L3) of the magnetic paths formed in the state after rotating the second stator 162 different from each other. Further, no space for at least one of the stator 160 and the rotor 170 moving in the extensional direction of the motor rotating shaft 150 may be provided as compared with a case of adjusting the air gap length by moving at least one of the stator 160 and the rotor 170 in the extensional direction of the motor rotating shaft 150, for example, whereby the electric motor 140 may not be increased in size. In addition, the positional relation between the first stator 161 (first teeth 164) and the second stator 162 (second teeth 167) can be changed in response to the vehicle state by forming the control system so that driving of the rotation driving potion 180 (motor 181) for rotating the second stator 162 is controllable by the controller 187 on the basis of the signal indicating the vehicle state, whereby the quantity of magnetic flux can be changed in response to the vehicle state. As a result of these, the electric two-wheeler comprising the electric motor 140 capable of setting/changing power generation characteristics and torque output characteristics varying with the quantity of magnetic flux while attaining downsizing can be obtained.

According to the third embodiment, the air gap length is so adjusted that substantially no magnetic flux flows to the portions of the first teeth 164 mounted with the coils 165 in the case of rotating the electric motor 140 with a low torque at a high speed, whereby the quantity of magnetic flux generated in the first teeth 164 can be inhibited from increase caused by a current flowing to the coils 165 due to the magnetic flux traversing the coils 165 in rotation of the rotor 170. Thus, a load with respect to rotation of the rotor 170 can be inhibited from increase. Further, inflow of the magnetic flux into the first teeth 164 and the second teeth 167 is suppressed in rotation of the rotor 170, whereby the load with respect to rotation of the rotor 170 can be inhibited from increase also by this.

### (Fourth Embodiment)

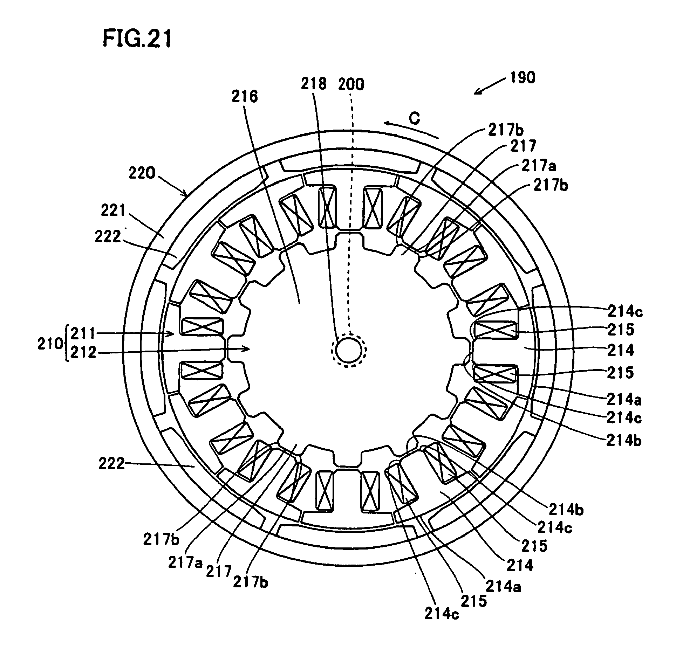

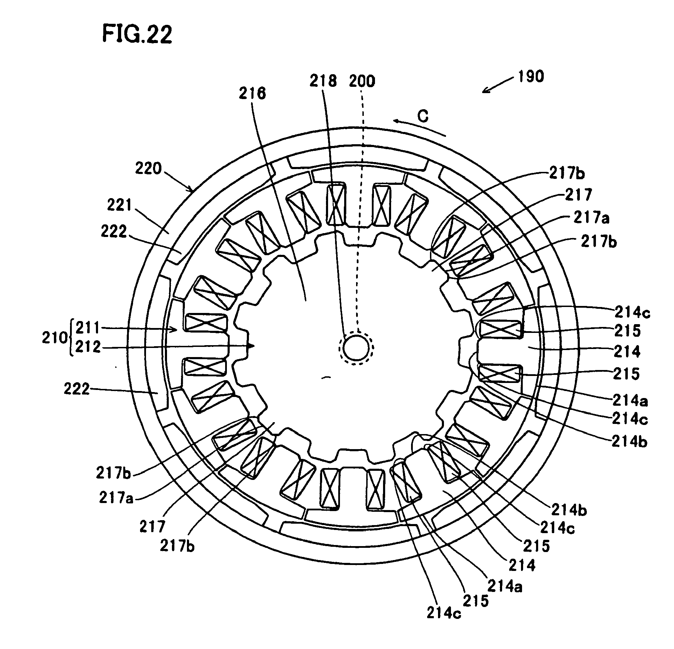

Referring to Figs. 21 and 22, an example of applying the present invention to an electric motor having a radial gap type structure dissimilarly to the aforementioned first to third embodiments is described in this fourth embodiment.

An electric motor 190 according to this fourth embodiment comprises a motor rotating shaft 200, a stator 210 and a rotor 220, as shown in Fig. 21. The motor rotating shaft 200 is an example of the "rotating shaft" in the present invention. The electric motor 190 according to the fourth embodiment has such a radial gap type structure that the rotor 220 is cylindrically formed and the stator 210 is arranged inside the rotor 220 at a prescribed interval with respect to the rotor 220. Further, the electric motor 190 according to the fourth embodiment is mounted on an electric two-wheeler (not shown) similar to the electric two-wheeler 100 according to the first embodiment shown in Fig. 1.

According to the fourth embodiment, the stator 210 is divided into two, i.e., a first stator 211 and a second stator 212. The first stator 211 is annularly formed, while the second stator 212 is arranged inside the first stator 211 at a prescribed interval. The second stator 212 is enabled to rotate about the axial core of the motor rotating shaft 200 serving as the rotation center in the rotational direction (direction of arrow C) of the rotor 220.

As the specific structure of the stator 210, the first stator 211 includes a plurality of first teeth 214 and a plurality of coils 215. The first teeth 214 are examples of the "first core members" in the present invention. The plurality of first teeth 214 are annularly arranged at a prescribed interval from each other. First end surfaces 214a of the first teeth 214 have a larger area than second end surfaces 214b opposite to the first end surfaces 214a. Therefore, the interval between the first end surfaces 214a of adjacent first teeth 214 is smaller than the interval between the second end surfaces 214b. Further, the first end surfaces 214a of the first teeth 214 are opposed to the rotor 220. In addition, ends 214c of the first teeth 214 closer to the second end surfaces 214b are chamfered. The plurality of coils 215 are mounted on the respective ones of the plurality of first teeth 214 respectively. The coils 215 are not mounted on portions of the first end surfaces 214a of the first teeth 214.

The second stator 212 includes a stator yoke 216 having a plurality of second teeth 217 and a rotating shaft 218. The second teeth 217 are examples of the "second core members" in the present invention. The stator yoke 216 is formed in the shape of a disc, and the plurality of second teeth 217 are provided on the circumferential surface of the discoid stator yoke 216 to protrude from the circumferential surface of the stator yoke 216. Further, the plurality of second teeth 217 are arranged at a prescribed interval from each other along the circumferential direction of the discoid stator yoke 216. In addition, ends 217b of the second teeth 217 closer to protruding end surfaces 217a are chamfered. The rotating shaft 218 is enabled to rotate in the rotational direction (direction of arrow C) of the rotor 220. Further, the rotating shaft 218 is so mounted on the central portion of the stator yoke 216 that the stator 216 can corotate with the rotating shaft 218.

The cylindrical rotor 220 includes a rotor yoke 221 and a plurality of magnets 222. The rotor yoke 221 is cylindrically formed, and enabled to corotate with the motor rotating shaft 200. The plurality of magnets 222 include a plurality of magnets 222 of north poles and a plurality of magnets 222 of south poles, and are mounted on the inner peripheral surface of the rotor yoke 221. In the plurality of magnets 222, the north poles and the south poles are alternately arranged at a prescribed interval along the circumferential direction of the discoid rotor yoke 221.

In the electric motor 190 according to the fourth embodiment, magnetic paths are formed by the rotor 220, the first stator 211 and the second stator 212 when the first teeth 214 and the second teeth 217 are opposed to each other as shown in Fig. 21, similarly to the case of the aforementioned third embodiment. When the first teeth 214 and the second teeth 217 are opposite to each other, the distance between the first teeth 214 and the magnets 222 and the distance between the first teeth 214 and the second teeth 217 are the air gap lengths functioning as magnetic resistance with respect to the magnetic paths.

When the second teeth 217 move to positions not opposite to the first teeth 214 as shown in Fig. 22, magnetic paths are formed by the rotor 220 and the first stator 211, similarly to the case of the aforementioned third embodiment. When the second teeth 217 move to the positions not opposite to the first teeth 214, the distance between the first teeth 214 and the magnets 222 and the distance between adjacent first teeth 214 on the sides of the end surfaces 214a are the air gap lengths functioning as the magnetic resistance with respect to the magnetic paths.

In the electric motor 190 according to the fourth embodiment, the air gap lengths with respect to the magnetic paths in the case where the first teeth 214 and the second teeth 217 are not opposite to each other exceed the air gap lengths with respect to the magnetic paths in the case where the first teeth 214 and the second teeth 217 are opposite to each other, similarly to the aforementioned third embodiment. In other words, the quantity of magnetic flux in the case where the first teeth 214 and the second teeth 217 are not opposite to each other decreases below the quantity of magnetic flux in the case where the first teeth 214 and the second teeth 217 are opposite to each other.

A method of adjusting the air gap lengths in the electric motor 190 according to the fourth embodiment is now described with reference to Figs. 21 and 22.

In a case of rotating the electric motor 190 with a low torque at a low speed, the second stator 212 is not rotated but held on a position of an initial state, as shown in Fig. 21. In other words, the second stator 212 is' so held that the second teeth 217 are opposite to the first teeth 214. In a case of rotating the electric motor 190 with a low torque at a high speed from the state of Fig. 21, the second stator 212 is rotated in the rotational direction (direction of arrow C) of the rotor 220 so that the second teeth 217 and the first teeth 214 are not opposite to each other, as shown in Fig. 22. In this case, the quantity of magnetic flux in the state (see Fig. 22) after rotating the second stator 212 decreases below the quantity of magnetic flux in the initial state (see Fig. 21) before rotating the second stator 212, whereby a load with respect to rotation of the rotor 220 is reduced. Thus, low-torque high-speed rotation is rendered possible.

According to the fourth embodiment, the air gap lengths (quantity of magnetic flux) with respect to the magnetic paths can be adjusted by rotating the second stator 212 similarly to the aforementioned third embodiment in the electric motor 190 having the radial gap type structure, due to the aforementioned structure. Thus, the electric two-wheeler comprising the electric motor 190 capable of adjusting power generation characteristics and torque output characteristics varying with the quantity of magnetic flux while attaining downsizing can be obtained similarly to the aforementioned third embodiment.

The embodiments disclosed this time must be considered as illustrative and not restrictive in all points. The scope of the present invention is shown not by the above description of the embodiments but by the scope of claim for patent, and all modifications within the meaning and range equivalent to the scope of claim for patent are included.

For example, while the examples of applying the present invention to the electric two-wheelers have been shown in the aforementioned first to fourth embodiments, the present invention is not restricted to this but is also applicable to an electrically driven vehicle other than the electric two-wheeler.

While the vehicle controller has been enabled to determine whether the vehicle state is a normal traveling state or a push-walking (power supply cutoff) state in the aforementioned first embodiment, the present invention is not restricted to this but the vehicle controller may be enabled to determine a prescribed vehicle state other than the normal traveling state and the push-walking (power supply cutoff) state. In this case, the quantity of rotation of the stepping motor can be controlled to reach a value suitable to the prescribed vehicle state other than the normal traveling state and the push-walking (power supply cutoff) state with the vehicle controller.

While the air gap length adjusting command value for controlling the quantity of rotation of the stepping motor has been calculated on the basis of the battery voltage signal and the motor speed signal in the aforementioned first embodiment, the present invention is not restricted to this but a position detecting sensor for detecting the position of the rotor of the electric motor may be provided for calculating the air gap length adjusting command value for controlling the quantity of rotation of the stepping motor on the basis of a rotor position signal indicating the position of the rotor output from this position detecting sensor.

### FURTHER EMBODIMENTS

An electrically driven vehicle comprising:
a rotating electric machine (10, 140, 190) including a rotating shaft (11, 150, 200), a rotor (13, 170, 220) mounted on said rotating shaft for corotating with said rotating shaft and a stator (12, 160, 210) opposed to said rotor at a prescribed interval, with said rotor and said stator so formed that an air gap length functioning as magnetic resistance is adjustable; and
a vehicle state detecting portion (60, 110) for detecting a vehicle state, wherein
said air gap length is adjusted on the basis of a signal indicating said vehicle state detected by said vehicle state detecting portion.

The electrically driven vehicle according to embodiment 1, wherein
said rotor and said stator are opposed to each other at the prescribed interval in the extensional direction of said rotating shaft, and
said air gap length between said rotor and said stator is adjusted by adjusting the distance between said rotor and said stator in the extensional direction of said rotating shaft on the basis of the signal indicating said vehicle state.

The electrically driven vehicle according to embodiment 2, wherein
said rotating electric machine further includes an air gap length adjusting mechanism portion (20) for adjusting said air gap length by moving at least one of said rotor and said stator in the extensional direction of said rotating shaft, and
said air gap length adjusting mechanism portion is driven on the basis of the signal indicating said vehicle state.

- The electrically driven vehicle according to embodiment 3, wherein
said air gap length adjusting mechanism portion includes at least an adjustment motor (21) rotating on the basis of the signal indicating said vehicle state, and
said air gap length is adjusted to a value responsive to the quantity of rotation of said adjustment motor.

The electrically driven vehicle according to embodiment 4, wherein
said air gap length adjusting mechanism portion further includes a movable member (22) moving in the extensional direction of said rotating shaft in response to the quantity of rotation of said adjustment motor, and
at least one of said rotor and said stator is moved in the extensional direction of said rotating shaft with said movable member.

The electrically driven vehicle according to embodiment 4, further comprising an adjustment motor control portion (70, 120) for controlling the quantity of rotation of said adjustment motor, wherein
the quantity of rotation of said adjustment motor is controlled by said adjustment motor control portion on the basis of the signal indicating said vehicle state.

The electrically driven vehicle according to embodiment 6, wherein
said adjustment motor control portion determines whether said vehicle state is a normal traveling state or a push-walking state on the basis of the signal indicating said vehicle state.

The electrically driven vehicle according to embodiment 7. wherein
the quantity of rotation of said adjustment motor is controlled by said adjustment motor control portion so that said air gap length reaches a first value when said vehicle state is determined as the normal traveling state by said adjustment motor control portion, and
the quantity of rotation of said adjustment motor is controlled by said adjustment motor control portion so that said air gap length reaches a second value larger than said first value when said vehicle state is determined as the push-walking state by said adjustment motor control portion.

The electrically driven vehicle according to embodiment 6, wherein
the signal indicating said vehicle state includes at least a rotating electric machine speed signal indicating the speed of said rotating electric machine, and
the quantity of rotation of said adjustment motor is controlled by said adjustment motor control portion on the basis of said rotating electric machine speed signal.

The electrically driven vehicle according to embodiment 9, wherein
the quantity of rotation of said adjustment motor is controlled by said adjustment motor control portion so that said air gap length reaches a third value when said rotating electric machine is in high-speed rotation, and
the quantity of rotation of said adjustment motor is controlled by said adjustment motor control portion so that said air gap length reaches a fourth value smaller than said third value when said rotating electric machine is in low-speed rotation.

The electrically driven vehicle according to embodiment 6, further comprising a battery (50), supplying a current to said rotating electric machine, charged by power generation of said rotating electric machine, wherein
the signal indicating said vehicle state includes at least a battery voltage signal indicating the voltage of said battery, and
the quantity of rotation of said adjustment motor is controlled by said adjustment motor control portion on the basis of said battery voltage signal.

The electrically driven vehicle according to embodiment 11, wherein
said air gap length is adjusted by said adjustment motor so that an induced voltage generated by said rotating electric machine lowers below the voltage of said battery.

The electrically driven vehicle according to embodiment 1, wherein
said stator (160, 210) includes a first stator (161, 211) and a second stator (162, 212) opposed to each other at a prescribed interval, and
d air gap length is adjusted by moving at least one of said first stator and said second stator.

The electrically driven vehicle according to embodiment 13, wherein
said first stator includes a plurality of first core members (164, 214) annularly arranged at a prescribed interval from each other,
said second stator includes a plurality of second core members (167, 217) annularly arranged at a prescribed interval from each other, and
said air gap length is adjusted by moving at least one of said first stator and said second stator thereby changing to a state where said first core members and said second core members are opposite to each other and a state where said first core members and said second core members are not opposite to each other.

The electrically driven vehicle according to embodiment 14, wherein
either said first core members or said second core members are opposed to said rotor,
a coil (165, 215) is mounted on either said first core members or said second core members opposed to said rotor, and
said air gap length is so adjusted that substantially no magnetic path is formed on a portion of either said first core members or said second core members mounted with said coil.

The electrically driven vehicle according to embodiment 14, wherein
said air gap length is adjusted by rotating said second stator in the rotational direction of said rotor.

The electrically driven vehicle according to embodiment 16, further comprising a rotation driving portion (180) for rotating said second stator in the rotational direction of said rotor.

The electrically driven vehicle according to embodiment 16, wherein
said air gap length between said first core members and said second core members decreases below the distance between adjacent said first core members when said first core members and said second core members are opposite to each other,
said air gap length between adjacent said first core members decreases below the distance between said first core members and said second core members when said second stator rotates in the rotational direction of said rotor so that said second core members move to a position not opposite to said first core members, and
said air gap length between said first core members and said second core members in the case where said first core members and said second core members are opposite to each other is smaller than said air gap length between adjacent said first core members in the case where said second core members move to the position not opposite to said first core members.

The electrically driven vehicle according to embodiment 14, wherein
said plurality of first core members constituting said first stator are opposed to said rotor at a prescribed interval in the extensional direction of said rotating shaft while said plurality of second core members constituting said second stator are opposed to said first stator at a prescribed interval in the extensional direction of said rotating shaft,
a magnetic path is formed by said rotor, said first core members and said second core members in the state where said first core members and said second core members are opposite to each other, and
a magnetic path is formed by said rotor and said first core members in the state where said first core members and said second core members are not opposite to each other.

The electrically driven vehicle according to embodiment 14, wherein
said rotor includes a cylindrically formed rotor,
said plurality of first core members constituting said first stator are opposed to said rotor at a prescribed interval in the radial direction while said plurality of second core members constituting said second stator are arranged inside or outside said first stator at a prescribed interval with respect to said first stator,
a magnetic path is formed by said rotor, said first core members and said second core members in the state where said first core members and said second core members are opposite to each other, and
a magnetic path is formed by said rotor and said first core member in the state where said first core members and said second core members are not opposite to each other.

## Claims

1. An electrically driven vehicle comprising:
a rotating electric machine (140, 190) including a rotating shaft (150, 200), a rotor (170, 220) mounted on said rotating shaft (150, 200), for corotating with said rotating shaft (150, 200), and a stator (160, 210) opposed to said rotor (170, 220) at a prescribed interval, with said rotor (170, 220) and said stator (160, 210) so formed that an air gap length functioning as magnetic resistance is adjustable; and
a vehicle state detecting portion (60, 110) for detecting a vehicle state, wherein
said air gap length is adjusted on the basis of a signal indicating said vehicle state detected by said vehicle state detecting portion (60, 110), wherein
said stator (160, 210) includes a first stator (161, 211) and a second stator (162, 212) opposed to each other at a prescribed interval, and
said air gap length is adjusted by moving at least one of said first stator (161, 211) and said second stator (162, 212).

2. The electrically driven vehicle according to claim 1, wherein
said air gap length is adjusted by adjusting an opposing state of said first stator (161, 211) and said second stator (162, 212) thereby changing from a state where the magnetic paths pass through both said first stator (161, 211) and said second stator (162, 212) toward a state where the magnetic paths pass through either said first stator (161, 211) or said second stator (162, 212).

3. The electrically driven vehicle according to claim 1, wherein
said air gap length is adjusted by adjusting an opposing state of said first stator (161, 211) and said second stator (162, 212) thereby changing from a state where said first stator (161, 211) and said second stator (162, 212) are opposite to each other toward a state where said first stator (161, 211) and said second stator (162, 212) are not opposite to each other.

4. The electrically driven vehicle according to claim 1, wherein
said first stator (161, 211) includes a plurality of first core members (164, 214) annularly arranged at a prescribed interval from each other, said second stator (162, 212) includes a plurality of second core members (167, 217) annularly arranged at a prescribed interval from each other, and
said air gap length is adjusted by rotating said second stator (162, 212) in the rotational direction of said rotor (170, 220) thereby changing to a state where the distance between said first core members and said second core members is smaller than the distance between adjacent said first core members and a state where the distance between said first core members and said second core embers is greater than the distance between adjacent said first core members.

5. The electrically driven vehicle according to claim 1, wherein
said first stator (161, 211) includes a plurality of first core members (164, 214) annularly arranged at a prescribed interval from each other,
said second stator (162, 212) includes a plurality of second core members (167, 217) annularly arranged at a prescribed interval from each other, and
said air gap length is adjusted by moving at least one of said first stator (161, 211) and said second stator (162, 212) thereby changing to a state where said first core members and said second core members are opposite to each other and a state where said first core members and said second core members are not opposite to each other.

6. The electrically driven vehicle according to claim 5, wherein
either said first core members or said second core members are opposed to said rotor (170, 220),
a coil (165, 215) is mounted on either said first core members or said second core members opposed to said rotor (170, 220), and
said air gap length is so adjusted that substantially no magnetic path is formed on a portion of either said first core members or said second core members mounted with said coil.

7. The electrically driven vehicle according to claim 5, wherein
said air gap length is adjusted by rotating said second stator (162, 212) in the rotational direction of said rotor (170, 220).

8. The electrically driven vehicle according to claim 7, further comprising a rotation driving portion (180) for rotating said second stator (162, 212) in the rotational direction of said rotor (170, 220).

9. The electrically driven vehicle according to claim 7, wherein
said air gap length between said first core members and said second core members decreases below the distance between adjacent said first core members when said first core members and said second core members are opposite to each other,
said air gap length between adjacent said first core members decreases below the distance between said first core members and said second core members when said second stator (162, 212) rotates in the rotational direction of said rotor (170, 220) so that said second core members move to a position not opposite to said first core members, and
said air gap length between said first core members and said second core members in the case where said first core members and said second core members are opposite to each other is smaller than said air gap length between adjacent said first core members in the case where said second core members move to the position not opposite to said first core members.

10. The electrically driven vehicle according to claim 5, wherein
said plurality of first core members constituting said first stator (161, 211) are opposed to said rotor (170, 220) at a prescribed interval in the extensional direction of said rotating shaft while said plurality of second core members constituting said second stator (162, 212) are opposed to said first stator (161, 211) at a prescribed interval in the extensional direction of said rotating shaft,
a magnetic path is formed by said rotor (170, 220), said first core members and said second core members in the state where said first core members and said second core members are opposite to each other, and
a magnetic path is formed by said rotor (170, 220) and said first core members in the state where said first core members and said second core members are not opposite to each other.

11. The electrically driven vehicle according to claim 5, wherein
said rotor (170, 220) includes a cylindrically formed rotor (170, 220), said plurality of first core members constituting said first stator (161, 211) are opposed to said rotor (170, 220) at prescribed interval in the radial direction while said plurality of second core members constituting said second stator (162, 212) are arranged inside or outside said first stator (161, 211) at a prescribed interval with respect to said first stator (161, 211),
a magnetic path is formed by said rotor (170, 220), said first core members and said second core members in the state where said first core members and said second core members are opposite to each other, and a magnetic path is formed by said rotor (170, 220) and said first core member in the state where said first core members and said second core members are not opposite to each other.
